# EUROPÄISCHE PATENTSCHRIFT

(11) **EP 3 838 601 B1**
(45) Veröffentlichungstag und Bekanntmachung des Hinweises auf die Patenterteilung: **30.03.2022**
(21) Anmeldenummer: 19217589.1
(22) Anmeldetag: 18.12.2019
(51) Int. Cl.: B41J 3/407, B41J 11/20, B41J 11/04, B41J 15/04, G01G 19/414, G01G 23/42, G07G 1/00

(54) **ETIKETTENDRUCKER**
LABEL PRINTER
IMPRIMANTE D'ÉTIQUETTES

(43) Veröffentlichungstag der Anmeldung: 23.06.2021
(73) Patentinhaber: Bizerba SE & Co. KG, 72336 Balingen (DE)
(72) Erfinder: Reiss, Rafael, 72336 Bailingen (DE); Offermann, Holger, 72469 Meßstetten (DE)
(74) Vertreter: Manitz Finsterwald Patent- und Rechtsanwaltspartnerschaft mbB

(56) Entgegenhaltungen:
- DE-A1-102008 019 931

## Beschreibung

Die Erfindung betrifft einen Etikettendrucker zum Bedrucken von auf einem Trägerband aufgebrachten, insbesondere auf Rolle gewickelten Etiketten, umfassend eine Druckkopfeinheit mit einem Druckkopf und einen Antriebsmechanismus für das Trägerband mit einer angetriebenen, insbesondere ortsfest gelagerten, Trägerband-Zugwalze.

Etikettendrucker werden zur Kennzeichnung von Waren im produzierenden Gewerbe und in der Logistik sowie in der lebensmittelverarbeitenden Industrie, insbesondere als Teil eines Systems zur Gewichts- und Preisauszeichnung, eingesetzt. Üblicherweise sind die Etiketten dabei auf einem Trägerband aufgebracht und liegen in Form einer Etikettenrolle vor. Im Betrieb des Etikettendruckers werden die Etiketten dann mittels der Trägerband-Zugwalze an dem Druckkopf vorbeigeführt und bedruckt. Danach werden die Etiketten von dem Trägerband abgelöst und auf die Waren appliziert, und das rücklaufende Trägerband kann aufgewickelt werden. Allerdings ist das Wechseln der Etikettenrolle, d.h. wenn eine verbrauchte Etikettenrolle durch eine neue Etikettenrolle ersetzt werden soll, oftmals etwas umständlich und mit einem gewissen Zeitaufwand verbunden. DE-A1-10 2008 019 931 offenbart einen Etikettendrucker.

Der Erfindung liegt die Aufgabe zugrunde, einen Etikettendrucker der eingangs genannten Art anzugeben, der einen einfachen und schnellen Wechsel der Etikettenrolle ermöglicht.

Diese Aufgabe wird durch einen Etikettendrucker mit den Merkmalen des Anspruchs 1 gelöst, und insbesondere dadurch, dass der Etikettendrucker eine Führungseinheit für das Trägerband umfasst, die um eine Schwenkachse zwischen einer Betriebsstellung und einer Einsetzstellung für das Trägerband verschwenkbar gelagert ist, wobei die Führungseinheit ein Gegenelement zu dem Druckkopf, das dazu ausgebildet ist, in der Betriebsstellung das Trägerband mit den Etiketten in Anlage an dem Druckkopf zu halten, insbesondere eine angetriebene Druckwalze, und wenigstens eine der Trägerband-Zugwalze zugeordnete, nicht angetriebene Trägerband-Andruckrolle umfasst, wobei in der Betriebsstellung der Führungseinheit das Trägerband zwischen dem Druckkopf und dem Gegenelement sowie zwischen der Trägerband-Zugwalze und der jeweiligen Trägerband-Andruckrolle hindurchführbar und insbesondere entlang einer vorgegebenen Trägerband-Transportbahn transportierbar ist, und wobei in der Einsetzstellung der Führungseinheit das Gegenelement von dem Druckkopf und die jeweilige Trägerband-Andruckrolle von der Trägerband-Zugwalze weggeschwenkt ist. Das Wegschwenken kann abstandvergrößernd und/oder -schaffend sein.

Erfindungsgemäß umfasst der Etikettendrucker eine Führungseinheit für das Trägerband, die sowohl mit dem Gegenelement zu dem Druckkopf als auch der wenigstens einen, der Trägerband-Zugwalze zugeordneten Trägerband-Andruckrolle versehen ist. Die Führungseinheit kann dabei zwischen ihrer Betriebsstellung und der Einsetzstellung für das Trägerband verschwenkt werden. In der Betriebsstellung ist ein Wechsel der Etikettenrolle zeitaufwändig, da bei dieser Stellung der Druckkopf und das Gegenelement einerseits und die Trägerband-Zugwalze und die jeweilige Trägerband-Andruckrolle anderseits jeweils zumindest nicht ausreichend weit voneinander beabstandet sind, so dass das Trägerband der neuen Etikettenrolle umständlich zwischen den Druckkopf und das Gegenelement und zwischen die Trägerband-Zugwalze und die jeweilige Trägerband-Andruckrolle eingefädelt werden muss. Um dies zu vermeiden, wird bei einem Wechsel der Etikettenrolle das Führungselement einschließlich des Gegenelements und der wenigstens einen, der Trägerband-Zugwalze zugeordneten Trägerband-Andruckrolle in die Einsetzstellung für das Trägerband verschwenkt, wodurch das Gegenelement von dem Druckkopf und die jeweilige Trägerband-Andruckrolle von der Trägerband-Zugwalze weggeschwenkt wird. Der Abstand zwischen dem Druckkopf und dem Gegenelement und der jeweilige Abstand zwischen der Trägerband-Zugwalze und der jeweiligen Trägerband-Andruckrolle wird dadurch vergrößert bzw. erst geschaffen, so dass das Trägerband nicht umständlich eingefädelt werden muss, sondern ohne weiteren Aufwand ganz einfach bzw. ungehindert eingelegt werden kann. Besonders vorteilhaft ist dabei, dass das Gegenelement und die wenigstens eine Trägerband-Andruckrolle jeweils Teil derselben schwenkbaren Einheit in Form der Führungseinheit sind, so dass das Gegenelement und die jeweilige Trägerband-Andruckrolle gemeinsam verschwenkt werden und nicht separat voneinander verschwenkt werden müssen, so dass ein Wechsel der Etikettenrolle besonders einfach und schnell stattfinden kann und unnötig lange Stillstandzeiten des Etikettendruckers vermieden werden können.

Erfindungsgemäß kann der Trägerband-Zugwalze eine Trägerband-Andruckrolle zugeordnet sein, oder es können der Trägerband-Zugwalze mehrere, insbesondere zwei, Trägerband-Andruckrollen zugeordnet sein. Sofern in dieser Erfindung von einer jeweiligen Trägerband-Andruckrolle die Rede ist, betrifft dies bei einer Trägerband-Andruckrolle die eine Trägerband-Andruckrolle und bei mehreren, insbesondere zwei, Trägerband-Andruckrollen jede der mehreren, insbesondere zwei, Trägerband-Andruckrollen. Die jeweilige Trägerband-Andruckrolle wird nicht angetrieben, drückt das Trägerband jedoch gegen die Trägerband-Zugwalze. Die Trägerband-Zugwalze alleine wäre nicht ausreichend geeignet, das Trägerband zu ziehen. Durch die wenigstens eine Trägerband-Andruckrolle kann jedoch eine Anpresskraft und damit eine ausreichende Vortriebskraft auf das Trägerband erzeugt werden.

Die Führungseinheit kann ein zweiarmiges Winkelelement umfassen, das um die Schwenkachse verschwenkbar gelagert ist, wobei das Gegenelement an einem ersten Winkelarm und die jeweilige Trägerband-Andruckrolle an einem zweiten Winkelarm angeordnet ist. Der von den beiden Winkelarmen eingeschlossene Winkel kann dabei einen Wert besitzen, der zwischen 90° und 170°, insbesondere zwischen 110° und 150°, liegt. Durch die winklige Ausbildung der Führungseinheit kann eine kompakte Ausbildung des Etikettendruckers erreicht werden, da dann die Druckfunktionalität und die Antriebsfunktionalität sowohl in horizontaler als auch in vertikaler Richtung zueinander versetzt angeordnet sein können. Darüber hinaus kann die Führungseinheit eine Umlenkrolle umfassen, die innen am Scheitelpunkt des Winkelelements vorgesehen ist, um die Trägerband-Transportbahn an die winkelige Ausbildung der Führungseinheit anzupassen. Darüber hinaus kann die Führungseinheit eine weitere Umlenkrolle umfassen, die außen am Scheitelpunkt des Winkelelements vorgesehen ist.

Insbesondere können in der Transportrichtung des Trägerbands gesehen die Trägerband-Zugwalze und die jeweilige Trägerband-Andruckrolle nach dem Drucckopf und dem Gegenelement und insbesondere nach einer nach dem Druckkopf und dem Gegenelement angeordneten Spendekante des Etikettendruckers angeordnet sein. Bei der Trägerband-Zugwalze handelt es sich dann um einen Antrieb, der am rücklaufenden Trägerband angreift. Ferner kann eine in der Transportrichtung des Trägerbands gesehen nach der Trägerband-Zugwalze und der wenigstens einen Trägerband-Andruckrolle angeordnete, angetriebene Trägerband-Aufwickelwalze vorgesehen sein.

Bevorzugt ist die jeweilige Träger-Andruckrolle senkrecht zu ihrer Rotationsachse, welche parallel zu der Drehachse der Trägerband-Zugwalze verläuft, und in der Betriebsstellung der Führungseinheit in einer Verschiebrichtung auf die Trägerband-Zugwalze zu, insbesondere linear, verschiebbar gelagert, wobei zur Ausübung einer Anpresskraft auf das Trägerband eine Federeinrichtung vorgesehen ist, die die jeweilige Trägerband-Andruckrolle in die Verschieberichtung vorspannt, insbesondere zieht. Der Abstand zwischen der Trägerband-Zugwalze und der jeweiligen Trägerband-Andruckrolle muss an die Dicke des jeweils eingesetzten Trägerbands angepasst werden. Einerseits muss der Abstand zwar groß genug sein, um das Trägerband hindurchführen zu können, andererseits darf der Abstand nicht zu groß sein, um eine ausreichend große Anpress- bzw. Vortriebskraft auf das Trägerband erzeugen zu können. Dadurch, dass die jeweilige Trägerband-Andruckrolle in Richtung der Trägerband-Zugwalze verschiebbar und vorgespannt ist, können sich bei eingelegtem Trägerband der passende Abstand zwischen der Trägerband-Zugwalze und der jeweiligen Trägerband-Andruckrolle und die passende Anpresskraft auf das Trägerband letztlich automatisch einstellen, ohne dass eine separate Einstellung durch einen Bediener erforderlich ist. Darüber hinaus ist eine Federeinrichtung einfach realisierbar und zuverlässig. Dabei ist es nicht zwingend erforderlich, dass die Richtung der Vorspannung parallel zu der Verschieberichtung verläuft, sondern diese beiden Richtungen können auch unter einem solchen spitzen Winkel zueinander orientiert sein, dass bei der durch die Federeinrichtung ausgeübten Federkraft eine ausreichende Vortriebskraft auf das Trägerband erzeugt wird. Da bei zwei Trägerband-Andruckrollen die Rotationsachsen jeweils parallel zu der Drehachse der Trägerband-Zugwalze verlaufen, verlaufen die beiden Rotationsachsen der beiden Trägerband-Andruckrollen auch parallel zueinander. Grundsätzlich kann die jeweilige Trägerband-Andruckrolle auch entlang einer gekrümmten Bahn verschiebbar gelagert sein.

Dabei ist es bevorzugt, wenn zwei Trägerband-Andruckrollen vorgesehen sind, wobei die Trägerband-Zugwalze in der Betriebsstellung der Führungseinheit zwischen den beiden Trägerband-Andruckrollen angeordnet ist und/oder die Federeinrichtung die beiden Trägerband-Andruckrollen aufeinander zu vorspannt. Das Trägerband kann dann von zwei einander gegenüberliegenden Seiten an die Trägerband-Zugwalze angepresst werden. Durch den Einsatz von zwei Trägerband-Andruckrollen kann die vorgenannte Vortriebskraft erhöht werden. Hierdurch ist es auch einfacher möglich, die Trägerband-Transportbahn derart zu wählen, dass das rücklaufende Trägerband mit seiner silikonisierten und damit an sich weniger Haftung aufweisenden Vorderseite, d.h. mit der Seite, auf der zuvor, d.h. vor ihrer Ablösung, die Etiketten aufgebracht waren, an der Trägerwand-Zugwalze anliegt. Die Federeinrichtung kann für die Vorspannung der beiden Trägerband-Andruckrollen gemeinsame oder separate Federelemente aufweisen.

Nach einer Ausgestaltung der Erfindung ist die jeweilige Trägerband-Andruckrolle an ihren beiden axialen Enden verschiebbar gelagert. Hierdurch kann auf einfache Weise eine stabile und zuverlässige verschiebbare Lagerung der jeweiligen Trägerband-Andruckrolle erreicht werden. Insbesondere kann hierdurch einem Verkanten der jeweiligen Trägerband-Andruckrolle beim Verschieben entgegengewirkt werden. Darüber hinaus ist eine derartige Lagerung sehr flexibel. Insbesondere können hierdurch zumindest bestimmte Fertigungstoleranzen gut ausgeglichen werden.

Die Führungseinheit kann eine Halterung umfassen, um die jeweilige Trägerband-Andruckrolle verschiebbar zu lagern, wobei bevorzugt die Halterung zwei, insbesondere gabelförmig angeordnete, Haltearme aufweist, an und zwischen denen die jeweilige Trägerband-Andruckrolle verschiebbar gelagert ist. Die beiden Haltearme definieren also einen Zwischenbereich, in dem die jeweilige Trägerband-Andruckrolle angeordnet ist. Beim Verschwenken der Führungseinheit wird die Halterung und damit die jeweilige Trägerband-Andruckrolle verschwenkt.

Vorzugsweise sind die beiden Haltearme jeweils mit wenigstens einer, insbesondere linear verlaufenden, Führungsbahn versehen, in denen die beiden axialen Enden der jeweiligen Trägerband-Andruckrolle verschiebbar geführt sind. Unter dem Begriff Führungsbahn ist jede Einrichtung zu verstehen, die das jeweilige axiale Ende entlang einer vorgegebenen Bewegungslinie führt. Durch die verschiebbare Lagerung der jeweiligen Trägerband-Andruckrolle an ihren beiden axialen Enden können die bereits vorstehend erläuterten Vorteile erreicht werden. Die jeweilige Führungsbahn kann dabei als ein länglicher, insbesondere rechteckförmiger oder langlochförmiger, den jeweiligen Haltearm durchsetzender Schlitz ausgebildet sein. Zusätzlich oder alternativ kann die jeweilige Trägerband-Andruckrolle an ihren beiden axialen Enden jeweils einen Gleitstein aufweisen, der in der jeweiligen Führungsbahn verschiebbar geführt ist. Hierbei handelt es sich um einerseits einfache und andererseits aber gleichzeitig langlebige und wartungsarme Maßnahmen, mit denen die verschiebbare Lagerung der jeweiligen Trägerband-Andruckrolle zuverlässig und betriebssicher realisiert werden kann.

Nach einer weiteren Ausgestaltung der Erfindung umfasst die Federeinrichtung wenigstens eine Zugfeder, wobei die jeweilige Zugfeder an einem der beiden axialen Enden der jeweiligen Trägerband-Andruckrolle angreift. Bei einer Zugfeder handelt es sich um ein kostengünstiges und zuverlässiges Bauteil, das darüber hinaus auf einfache Weise an einem der beiden axialen Enden der jeweiligen Trägerband-Andruckrolle befestigt werden kann. Gegenüber einer Druckfeder bietet eine Zugfeder eine höhere Richtungsstabilität. Dabei ist es bevorzugt, wenn zwei Zugfedern vorgesehen sind, wobei die eine Zugfeder an dem einen der beiden axialen Enden der jeweiligen Trägerband-Andruckrolle und die andere Zugfeder an dem anderen der beiden axialen Enden der jeweiligen Trägerband-Andruckrolle angreift, oder wenn zwei Trägerband-Andruckrollen vorgesehen sind, wobei die jeweilige Zugfeder an einem der beiden axialen Enden der einen Trägerband-Andruckrolle und an einem der beiden axialen Enden der anderen Trägerband-Andruckrolle angreift. Die beiden vorgenannten Maßnahmen können auch kombiniert werden, so dass dann zwei Trägerband-Andruckrollen mit insgesamt vier axialen Enden und zwei Zugfedern für die vier axialen Enden vorliegen.

Bevorzugt ist vorgesehen, dass die jeweilige Zugfeder außerhalb des zwischen den beiden vorgenannten Haltearmen ausgebildeten Zwischenbereichs und/oder an den jeweiligen vorgenannten Haltearm anliegend angeordnet ist. Der Bereich außerhalb der beiden Haltearme ist gut zugänglich, so dass die jeweilige Zugfeder erforderlichenfalls schnell ausgetauscht werden kann. Darüber hinaus muss bei der Ausgestaltung und Anordnung der jeweiligen Zugfeder nicht bzw. kaum auf die Trägerband-Andruckrolle bzw. Trägerband-Andruckrollen Rücksicht genommen werden, die ja innerhalb der beiden Haltearme angeordnet ist bzw. sind.

Die jeweilige Zugfeder kann als ein, insbesondere langgestrecktes, sich in einer Ebene erstreckendes und/oder ungewundenes, Drahtbiegeteil ausgebildet sein, wobei bevorzugt das Drahtbiegeteil spiegelsymmetrisch ausgebildet ist und/oder die beiden Drahtenden der jeweiligen Zugfeder hakenförmig ausgebildet sind. Eine derartige Zugfeder ist kostengünstig herstellbar, einfach mit den Trägerband-Andruckrollen verbindbar und einfach verformbar und damit gut an die jeweils vorliegende Konstruktion anpassbar.

Grundsätzlich kann vorgesehen sein, dass in der Betriebsstellung der Führungseinheit die vorgegebene Trägerband-Transportbahn im Bereich der Trägerband-Zugwalze und der jeweiligen Trägerband-Andruckrolle einen S-förmigen Verlauf, d.h. einen Verlauf, der von einer Linkskrümmung in eine Rechtskrümmung wechselt oder umgekehrt, aufweist. Die Kontaktfläche des Trägerbands mit der angetriebenen Trägerband-Zugwalze kann damit vergrößert werden, so dass die Vortriebskraft auf das Trägerband weiter erhöht werden kann. Sind zwei Trägerband-Andruckrollen vorgesehen, ist es bevorzugt, wenn in der Betriebsstellung der Führungseinheit die vorgegebene Trägerband-Transportbahn im Bereich der Trägerband-Zugwalze und der beiden Trägerband-Andruckrollen einen Doppel-S-förmigen Verlauf aufweist. Der vorstehend im Zusammenhang mit einer Trägerband-Andruckrolle und einer S-förmig verlaufenden Trägerband-Transportbahn erläuterte Vorteil kann dann in einem noch höheren Maße eintreten, da sich in diesem Fall das Trägerband gewissermaßen teilweise um die Trägerband-Zugwalze herumschlingen kann.

Nach einer weiteren Ausgestaltung der Erfindung sind zwei Trägerband-Andruckrollen vorgesehen, die über einen Zwischenraum voneinander beabstandet angeordnet sind, wobei die Trägerband-Zugwalze in der Betriebsstellung der Führungseinheit in den Zwischenraum eingreift, insbesondere um den genannten Doppel-S-förmigen Verlauf der vorgegebenen Trägerband-Transportbahn zu erzeugen, und/oder in der Einsetzstellung der Führungseinheit relativ zu dem Zwischenraum, insbesondere vollständig, aus dem Zwischenraum zurückgezogen ist, wobei insbesondere vorgesehen ist, dass die Trägerband-Zugwalze ortsfest gelagert ist und beim Verschwenken der Führungseinheit von der Betriebsstellung in die Einsetzstellung der Zwischenraum bewegt wird.

Insbesondere ist vorgesehen, dass beim Verschwenken der Führungseinheit aus der Einsetzstellung in die Betriebsstellung zumindest in einer ersten Phase der Verschwenkbewegung die beiden Trägerband-Andruckrollen durch die Trägerband-Zugwalze, unter Vergrößerung ihres gegenseitigen Abstands und gegen die Vorspannung der Federeinrichtung auseinander gedrückt werden. Hierdurch kann die Anpresskraft auf das Trägerband und damit die Vortriebskraft auf das Trägerband auf einfache Weise und insbesondere für beide Trägerband-Andruckrollen symmetrisch erzeugt werden.

Es kann weiter vorgesehen sein, die Trägerband-Zugwalze relativ zu dem Zwischenraum über die zu den beiden Rotationsachsen der beiden Trägerband-Andruckrollen senkrechte Verbindungsgerade hinaus in den Zwischenraum hineingeschwenkt wird, so dass in einer an die erste Phase anschließenden zweiten Phase der Verschwenkbewegung die beiden Trägerband-Andruckrollen durch die vorgespannte Federeinrichtung und unter Verringerung ihres gegenseitigen Abstands wieder aufeinander zu verschoben werden. Dadurch können die beiden Trägerband-Andruckrollen mit der Trägerband-Zugwalze gewissermaßen verrastet werden, und die Führungseinheit kann in der Betriebsstellung gehalten werden. Zum Verschwenken der Führungseinheit aus der Betriebsstellung in die Einsetzstellung müssen die beiden Trägerband-Andruckrollen dann ebenfalls zunächst auseinander gedrückt werden.

Nach einer weiteren Ausgestaltung der Erfindung ist eine Halteeinrichtung vorgesehen, die dazu ausgebildet ist, die Führungseinheit in der Betriebsstellung wahlweise gegen ein Verschwenken in die Einsetzstellung zu sichern oder für ein Verschwenken in die Einsetzstellung freizugeben. Die Halteeinrichtung ist dafür vorgesehen, ein Verschwenken der Führungseinheit aus der Betriebsstellung in die Einsetzstellung entweder zu unterbinden oder zuzulassen. Es muss also zunächst die Halteeinrichtung betätigt werden, damit die Führungseinheit aus der Betriebsstellung in die Einsetzstellung verschwenkt werden kann.

Die Halteeinrichtung kann einen um eine Achse zwischen einer die Führungseinheit in der Betriebsstellung sichernden Haltestellung und einer die Führungseinheit freigebenden Freigabestellung drehbar gelagerten Hebel umfassen. Befindet sich der Hebel in der Haltestellung, kann die Führungseinheit die Betriebsstellung nicht verlassen. Befindet sich der Hebel in der Freigabestellung, wird dies hingegen ermöglicht. Bei einem drehbar gelagerten Hebel handelt es sich um ein kostengünstiges Bauteil, das darüber hinaus einfach und intuitiv zu bedienen ist.

Dabei kann insbesondere vorgesehen sein, dass in der Haltestellung der Hebel mit der sich in der Betriebsstellung befindlichen Führungseinheit verhakt, insbesondere mit einer an einem freien Ende des Hebels ausgebildeten Ausnehmung in einen pilzkopfförmigen Stift der sich in der Betriebsstellung befindlichen Führungseinheit einhakt. Grundsätzlich kann aber auch vorgesehen sein, dass die Führungseinheit ein Element aufweist, das in ein entsprechendes, an dem Hebel ausgebildetes Element einhakt.

Bevorzugt ist der Hebel zumindest in seiner Haltestellung festsetzbar, insbesondere durch eine von Hand betätigbare und/oder die Achse des Hebels definierende Schraube, insbesondere Rändelschraube. Der Hebel, der die Führungseinheit in der Betriebsstellung halten kann, kann selbst durch die Schraube in der Haltestellung gehalten bzw. festgesetzt werden. Alternativ oder zusätzlich kann vorgesehen sein, dass der Hebel an der Druckkopfeinheit drehbar gelagert ist, wodurch der Etikettendrucker besonders kompakt ausgebildet werden kann.

Nach einer weiteren Ausgestaltung der Erfindung ist der Etikettendrucker ein Thermotransfer-Etikettendrucker und dazu ausgebildet, ein insbesondere auf Rolle gewickeltes Thermotransferband aufzunehmen, das in der Betriebsstellung der Führungseinheit zwischen dem Druckkopf und dem Gegenelement hindurchführbar und insbesondere entlang einer vorgegebenen Thermotransferband-Transportbahn transportierbar ist, wobei ein Antriebsmechanismus für das Thermotransferband mit einer angetriebenen, insbesondere ortsfest gelagerten, Thermotransferband-Zugwalze vorgesehen ist, wobei die Druckkopfeinheit um eine Druckkopfeinheit-Schwenkachse zwischen einer Betriebsstellung und einer Einsetzstellung für das Thermotransferband verschwenkbar gelagert ist, wobei die Druckkopfeinheit eine der Thermotransferband-Zugwalze zugeordnete, nicht angetriebene Thermotransferband-Andruckrolle umfasst, wobei in der Betriebsstellung der Druckkopfeinheit das Thermotransferband zwischen der Thermotransferband-Zugwalze und der Thermotransferband-Andruckrolle hindurchführbar ist, und wobei in der Einsetzstellung der Druckkopfeinheit die Thermotransferband-Andruckrolle von der Thermotransferband-Zugwalze weggeschwenkt ist. Analog zu dem Wechsel der Etikettenrolle ist in der Betriebsstellung der Druckkopfeinheit ein Wechsel einer Thermotransferbandrolle zeitaufwändig, da bei dieser Stellung die Thermotransferband-Zugwalze und die Thermotransferband-Andruckrolle zumindest nicht ausreichend weit voneinander beabstandet sind, so dass das Thermotransferband der neuen Thermotransferbandrolle umständlich zwischen die Thermotransferband-Zugwalze und die Thermotransferband-Andruckrolle eingefädelt werden muss. Um dies zu vermeiden, wird bei einem Wechsel der Thermotransferbandrolle die Druckkopfeinheit einschließlich der der Thermotransferband-Zugwalze zugeordneten Thermotransferband-Andruckrolle in die Einsetzstellung für das Thermotransferband verschwenkt, wodurch die Thermotransferband-Andruckrolle von der Thermotransferband-Zugwalze weggeschwenkt wird. Der Abstand zwischen der Thermotransferband-Zugwalze und der Thermotransferband-Andruckrolle wird dadurch vergrößert bzw. erst geschaffen, so dass das Thermotransferband nicht umständlich eingefädelt werden muss, sondern ohne weiteren Aufwand ganz einfach bzw. ungehindert eingelegt werden kann.

Bevorzugt ist die Druckkopfeinheit in ihrer Betriebsstellung durch eine Festsetzeinrichtung festsetzbar, insbesondere durch einen von Hand betätigbaren, entlang seiner Längsachse zwischen einer Sperrstellung und einer Entsperrstellung verstellbaren Blockierstift. Die Festsetzeinrichtung ist dafür vorgesehen, ein Verschwenken der Druckkopfeinheit aus der Betriebsstellung in die Einsetzstellung entweder zu unterbinden oder zuzulassen. Es muss also zunächst die Festsetzeinrichtung betätigt werden, damit die Druckkopfeinheit aus der Betriebsstellung in die Einsetzstellung verschwenkt werden kann. Der Blockierstift kann dabei die Achse des vorgenannten Hebels, der zwischen der die Führungseinheit in der Betriebsstellung sichernden Haltestellung und der die Führungseinheit freigebenden Freigabestellung drehbar gelagert ist, bilden, so dass insgesamt weniger Bauteile erforderlich sind.

Der Blockierstift kann in Richtung der Sperrstellung vorgespannt sein, um die Druckkopfeinheit in der Betriebsstellung zu sichern. Darüber hinaus kann vorgesehen sein, dass der Blockierstift in der Sperrstellung in eine in einem Träger, insbesondere einer Trägerplatte, des Etikettendruckers ausgebildete Sperröffnung eingerückt und in der Entsperrstellung aus der Öffnung ausgerückt ist, insbesondere um einen einfachen Aufbau zu gewährleisten.

Insbesondere können in Transportrichtung des Thermotransferbands gesehen die Thermotransferband-Zugwalze und die Thermotransferband-Andruckrolle nach dem Druckkopf und dem Gegenelement angeordnet sein. Bei der Thermotransferband-Zugwalze handelt es sich dann um einen Antrieb, der am rücklaufenden Thermotransferband angreift. Ferner kann eine in Transportrichtung des Thermotransferbands gesehen nach der Thermotransferband-Zugwalze und der Thermotransferband-Andruckrolle angeordnete, angetriebene Thermotransferband-Aufwickelwalze vorgesehen sein.

Nach einer Ausgestaltung der Erfindung ist ein gemeinsamer Motor vorgesehen, der sowohl die Trägerband-Zugwalze als auch die Thermotransferband-Zugwalze antreibt, wobei bevorzugt die Thermotransferband-Zugwalze mittelbar über die Trägerband-Zugwalze und/oder durch Zwischenschaltung einer Rutschkupplung und/oder eines Getriebes angetrieben wird. Folglich sind die Trägerband-Zugwalze und die Thermotransferband-Zugwalze mechanisch miteinander synchronisiert und es wird für den Antrieb der beiden Zugwalzen nur ein Motor benötigt. Dies ist kostengünstig. Durch das Getriebe können die Trägerband-Zugwalze und die Thermotransferband-Zugwalze in einem festen Drehgeschwindigkeitsverhältnis zueinander angetrieben werden, und durch die Rutschkupplung können auftretende Variationen in der Drehgeschwindigkeit der Trägerband-Zugwalze und/oder der Thermotransferband-Zugwalze kompensiert werden. Der gemeinsame Motor kann ferner auch eine Thermotransferband-Aufwickelwalze antreiben, die bevorzugt mittelbar über die Rutschkupplung und/oder das Getriebe und/oder durch Zwischenschaltung einer weiteren Rutschkupplung angetrieben wird. Eine weitere Rutschkupplung für die Thermotransferband-Aufwickelwalze ist vorteilhaft, da im Betrieb immer mehr rücklaufendes Thermotransferband auf den Kern der Thermotransferband-Aufwickelwalze aufgewickelt wird und somit der wirksame Durchmesser der Thermotransferband-Aufwickelwalze im Laufe der Zeit steigt.

Grundsätzlich kann eine, insbesondere von einem eigenen Motor, angetriebene, insbesondere ortsfest gelagerte, Trägerband-Aufwickelwalze und/oder kann eine angetriebene, insbesondere ortsfest gelagerte, Thermotransferband-Aufwickelwalze vorgesehen sein. Grundsätzlich kann bzw. können die Trägerband-Aufwickelwalze und/oder die Thermotransferband-Aufwickelwalze auch extern von dem Etikettendrucker ausgebildet sein. Insbesondere umfasst der Etikettendrucker eine, insbesondere nicht angetriebene, Rollenhalterung für die Etikettenrolle und/oder eine, insbesondere nicht angetriebene, Rollenhalterung für die Thermotransferbandrolle. Grundsätzlich kann bzw. können die Rollenhalterung für die Etikettenrolle und/oder die Rollenhalterung für die Thermotransferbandrolle auch extern von dem Etikettendrucker ausgebildet sein.

Bei dem Etikettendrucker kann gewünscht sein, dass der Antriebsmechanismus für das Trägerband eine weitere angetriebene, insbesondere ortsfest gelagerte, Trägerband-Zugwalze aufweist, die bevorzugt von einem eigenen Motor angetrieben wird, und eine der weiteren Trägerband-Zugwalze zugeordnete, nicht angetriebene weitere Trägerband-Andruckrolle vorgesehen ist, wobei in Transportrichtung des Trägerbands gesehen die weitere Trägerband-Zugwalze und die weitere Trägerband-Andruckrolle vor dem Druckkopf und dem Gegenelement angeordnet sind. Durch das Vorschalten einer weiteren Trägerband-Zugwalze und einer weiteren Trägerband-Andruckrolle vor den Druckkopf und das Gegenelement kann das Trägerband mit höherer Geschwindigkeit entlang der Trägerband-Transportbahn transportiert werden als bislang bekannt. Dies wird dadurch erreicht, dass das Abziehen des Trägerbands von der Etikettenrolle nahe an der Etikettenrolle erfolgt und nicht von der Trägerband-Zugwalze und der jeweiligen Trägerband-Andruckrolle, die dem Druckkopf und dem Gegenelement nachgeschaltet sind und insbesondere erst nach einer scharfen Umlenkung an einer Spendekante des Etikettendruckers auf das Trägerband einwirken, übernommen werden muss. Aufgrund des mit einer höheren Geschwindigkeit angetriebenen Trägerbands können im Vergleich zu bekannten Etikettendruckern in derselben Zeit mehr Etiketten bedruckt und damit letztlich mehr Etiketten appliziert werden als bislang möglich. Darüber hinaus kann durch das Vorschalten einer weiteren Trägerband-Zugwalze und einer weiteren Trägerband-Andruckrolle vor den Druckkopf und das Gegenelement das Trägerband auch stärker beschleunigt werden, wie es nachstehend noch näher erläutert ist. Alternativ oder zusätzlich können durch die weitere Trägerband-Zugwalze und die weitere Trägerband-Andruckrolle Etikettenrollen verwendet werden, die schwerer abzuwickeln sind als üblicherweise verwendete Etikettenrollen, insbesondere schwerere Etikettenrollen.

Die weitere Trägerband-Andruckrolle kann Teil eines Schwenkelements sein, das um eine weitere Schwenkachse zwischen einer Betriebsstellung und einer Einsetzstellung für das Trägerband verschwenkbar gelagert ist, wobei in der Betriebsstellung des Schwenkelements das Trägerband zwischen der weiteren Trägerband-Zugwalze und der weiteren Trägerband-Andruckrolle hindurchführbar und insbesondere entlang der vorgegebenen Trägerband-Transportbahn transportierbar ist, und wobei in der Einsetzstellung die weitere Trägerband-Andruckrolle von der weiteren Trägerband-Zugwalze weggeschwenkt ist. Wie bereits vorstehend im Zusammenhang mit dem Druckkopf und dem Gegenelement einerseits und der Trägerband-Zugwalze und der jeweiligen Trägerband-Andruckrolle anderseits erläutert und analog hierzu ist in der Betriebsstellung des Schwenkelements ein Wechsel der Etikettenrolle zeitaufwändig, da bei dieser Stellung die weitere Trägerband-Zugwalze und die weitere Trägerband-Andruckrolle zumindest nicht ausreichend weit voneinander beabstandet sind, so dass das Trägerband der neuen Etikettenrolle umständlich zwischen die weitere Trägerband-Zugwalze und die weitere Trägerband-Andruckrolle eingefädelt werden muss. Um dies zu vermeiden, wird bei einem Wechsel der Etikettenrolle auch das Schwenkelement in die Einsetzstellung verschwenkt, wodurch die weitere Trägerband-Andruckrolle von der weiteren Trägerband-Zugwalze weggeschwenkt wird. Der Abstand zwischen der weiteren Trägerband-Zugwalze und der weiteren Trägerband-Andruckrolle wird dadurch vergrößert bzw. erst geschaffen, so dass das Trägerband nicht umständlich eingefädelt werden muss, sondern ohne weiteren Aufwand ganz einfach bzw. ungehindert eingelegt werden kann.

Dabei ist es bevorzugt, wenn der Drehsinn der Verschwenkbewegung des Schwenkelements aus der Einsetzstellung in die Betriebsstellung dem Drehsinn der weiteren Trägerband-Zugwalze entgegengesetzt ist. Hierdurch kann erreicht werden, dass im Betrieb des Etikettendruckers das zwischen der weiteren Trägerband-Zugwalze und der weiteren Trägerband-Andruckrolle hindurchgeführte Trägerband das Schwenkelement gewissermaßen in Richtung der Betriebsstellung zieht und einem Verschwenken in Richtung der Einsetzstellung entgegenwirkt.

Die Trägerband-Zugwalze, die weitere Trägerband-Zugwalze und die Druckwalze und optional eine Trägerband-Aufwickelwalze können von voneinander verschiedenen Motoren angetrieben werden, wobei die Motoren durch eine entsprechende Regelung elektronisch miteinander synchronisiert sind. Durch mehrere Motoren kann insgesamt mehr Leistung erzielt werden. Darüber hinaus gilt grundsätzlich, dass die Druckwalze von einem eigenen Motor angetrieben werden kann.

Der Etikettendrucker kann einen Betriebsmodus aufweisen, in dem der Druckkopf alternierend zwischen einer auf das Trägerband abgesenkten Position, die bevorzugt zum Bedrucken eines Etiketts eingenommen wird, und einer von dem Trägerband abgehobenen Position, die bevorzugt zwischen dem Bedrucken zweier aufeinander folgender Etiketten eingenommen wird, verstellt wird. Durch das Zwischenzeitliche Abheben in der Zeit, in der der Druckkopf nicht druckt, kann der Druckkopf geschont werden. Im Falle eines Thermotransfer-Druckkopfs kann zusätzlich Thermotransferband gespart werden. Das Abheben des Druckkopfs ist insbesondere bei einem wie nachstehend erläuterten Gegenelement möglich, das als Gleitplatte ausgebildet ist. Bei Verwendung einer Druckwalze als Gegenelement wird der Druckkopf üblicherweise nicht abgehoben, da üblicherweise auch die angetriebene Druckwalze ein korrespondierendes Element benötigt, um eine ausreichende Anpress- und Vortriebskraft auf das Trägerband zu erzeugen.

Bevorzugt werden in dem Betriebsmodus die Trägerband-Zugwalze und die weitere Trägerband-Zugwalze, und optional eine Trägerband-Aufwickelwalze, bei abgehobener Position des Druckkopfs mit einer höheren Drehgeschwindigkeit betrieben werden als bei abgesenkter Position des Druckkopfs. Hierzu muss das Trägerband zwischen dem Bedrucken aufeinander folgender Etiketten alternierend abgebremst und beschleunigt werden. Durch die weitere Trägerband-Zugwalze und die weitere Trägerband-Andruckrolle kann das Trägerband stärker beschleunigt werden, als dies bei einem aus dem Stand der Technik bekannten Drucker ohne den weiteren Antrieb durch die weitere Trägerband-Zugwalze und die weitere Trägerband-Andruckrolle der Fall wäre, so dass auch diesbezüglich ein Geschwindigkeitsvorteil erzielt werden kann. Dies kann insbesondere dann der Fall sein, wenn Schmucketiketten, d.h. vorgedruckte, insbesondere farbige Etiketten, verwendet werden, die nur noch in einem kleinen Bereich entlang ihrer Erstreckung in Transportrichtung des Trägerbands mit Gewichtsdaten, Haltbarkeitsnummer, Chargennummer und/oder dergleichen bedruckt werden, d.h. wenn Etiketten über große Bereiche, beispielsweise über mehr als 5 cm, hinweg nicht bedruckt werden. In den nicht zu bedruckenden Bereichen der Etiketten kann der Druckkopf abgehoben werden.

Insbesondere kann das Gegenelement als, insbesondere metallische und/oder mit einem Dämpfungselement, insbesondere einem Filz, versehene, Gleitplatte ausgebildet sein. Eine Druckwalze als Gegenelement bedingt aufgrund ihres Durchmessers einen gewissen Abstand zwischen dem Druckbereich und einer unmittelbar nachgeordneten Spende- oder Abziehkante des Etikettendruckers. Dabei ist es dann möglich, dass bei Ablösung eines vorlaufenden Etiketts an der Spendekante ein nachlaufendes Etikett bereits teilweise durch den Druckbereich hindurchgelaufen ist, so dass ein sogenannter Near-Edge-Druck an der vorderen Etikettenkante ohne weitere Maßnahmen nicht möglich ist. Um dies zu verhindern, muss entweder das Trägerband kurzzeitig reversiert werden, wodurch es zu einem Geschwindigkeitsverlust kommt und dadurch der Durchsatz an bedruckten Etiketten sinkt, oder die Etiketten müssen in einem größeren Abstand zueinander angeordnet werden, was mit höheren Kosten verbunden ist. Ist das Gegenelement als Gleitplatte ausgebildet, kann der Abstand zwischen dem Druckbereich und der Spendekante kleiner sein, so dass ein Near-Edge-Druck möglich ist, ohne dass weitere Maßnahmen getroffen werden müssen. Das Dämpfungselement kann vorgesehen sein, um Toleranzen der Gleitplatte und/oder des Druckkopfs auszugleichen und/oder eine Beschädigung des Druckkopfs beim Absenken in Richtung der Gleitplatte zu vermeiden.

Es ist bevorzugt, wenn die Druckkopfeinheit als austauschbares Modul ausgebildet ist und eine, insbesondere erste, Aufnahme für die Druckkopfeinheit, von der die Druckkopfeinheit aufgenommen ist, vorgesehen ist, und/oder wenn die Führungseinheit als austauschbares Modul ausgebildet ist und eine, insbesondere zweite, Aufnahme für die Führungseinheit, von der die Führungseinheit aufgenommen ist, vorgesehen ist. Die als Modul ausgebildete Druckkopfeinheit bildet eine geschlossene Funktionseinheit und kann als Ganzes von dem Etikettendrucker abgenommen werden, und die als Modul ausgebildete Führungseinheit bildet eine geschlossene Funktionseinheit und kann als Ganzes von dem Etikettendrucker abgenommen werden. Dies ermöglicht, die Druckkopfeinheit bzw. die Führungseinheit im Defektfall schnell und unkompliziert zu ersetzen. Darüber hinaus kann zur Umrüstung des Etikettendruckers die aufgenommene Druckkopfeinheit bzw. die aufgenommene Führungseinheit gegen eine Druckkopfeinheit anderer Art bzw. eine Führungseinheit anderer Art schnell und unkompliziert ausgetauscht werden. Insbesondere kann eine Druckkopfeinheit mit einem Thermotransfer-Druckkopf gegen eine Druckkopfeinheit mit einem Thermodirekt-Druckkopf ausgetauscht werden, oder umgekehrt, und eine Führungseinheit mit einem als Druckwalze ausgebildeten Gegenelement kann gegen eine Führungseinheit mit einem als Gleitplatte ausgebildeten Gegenelement ausgetauscht werden, oder umgekehrt. Der Etikettendrucker ist dadurch flexibel einsetzbar.

Die jeweilige Aufnahme kann einen horizontal angeordneten, insbesondere als Rundstab ausgebildeten Haltedorn, umfassen, der mit einem Ende an einem Träger, insbesondere einer Trägerplatte, befestigt ist und dessen anderes Ende freitragend von dem Träger absteht, wobei die Druckkopfeinheit und/oder die Führungseinheit von dem freitragenden Ende her auf die jeweilige Aufnahme aufgeschoben ist oder sind. Eine derartig ausgebildete Aufnahme ermöglicht ein besonders schnelles und besonders unkompliziertes Ersetzen oder Austauschen der Druckkopfeinheit bzw. Führungseinheit.

Die Druckkopfeinheit kann mittels einer per Hand lösbaren Schraube, insbesondere Rändelschraube, an der Aufnahme für die Druckkopfeinheit befestigt sein und/oder die Führungseinheit kann mittels einer per Hand lösbaren Schraube, insbesondere Rändelschraube, an der Aufnahme für die Führungseinheit befestigt sein. Mittels einer per Hand lösbaren Schraube kann die Druckkopfeinheit bzw. die Führungseinheit besonders einfach an der jeweiligen Aufnahme gehalten werden.

Vorteilhafte Ausgestaltungen der Erfindung sind auch in den Unteransprüchen, der Beschreibung und der Zeichnung beschrieben.

Die Erfindung wird im Folgenden beispielhaft unter Bezugnahme auf die Zeichnungen beschrieben. Es zeigen,
- Fig. 1: einen erfindungsgemäßen Etikettendrucker zum Bedrucken von auf einem Trägerband aufgebrachten Etiketten gemäß einer ersten Ausführungsform mit einer Druckkopfeinheit, einer Führungseinheit für das Trägerband und einem Hochgeschwindigkeitsantrieb, die sich jeweils in einer Betriebsstellung befinden,
- Fig. 2: einen erfindungsgemäßen Etikettendrucker gemäß einer zweiten Ausführungsform mit einer alternativen Führungseinheit, die sich in einer Einsetzstellung für das Trägerband befindet,
- Fig. 3: den Etikettendrucker aus Fig. 2, wobei sich zusätzlich die Druckkopfeinheit in einer Einsetzstellung für ein Thermotransferband befindet,
- Fig. 4: den Etikettendrucker aus Fig. 1, wobei sich der Hochgeschwindigkeitsantrieb in einer Einsetzstellung für das Trägerband befindet,
- Fig. 5: den Etikettendrucker aus Fig. 1, wobei sowohl die Druckkopfeinheit als auch die Führungseinheit abgenommen sind,
- Fig. 6: eine rückwärtige Ansicht des Etikettendruckers aus Fig. 1 auf den Antrieb des Etikettendruckers,
- Fig. 7: die Führungseinheit aus Fig. 1 in Einzeldarstellung mit zwei Andruckrollen, einer zugehörigen Halterung und einer Federeinrichtung,
- Fig. 8: die alternative Führungseinheit aus Fig. 2 in Einzeldarstellung mit zwei Andruckrollen, einer zugehörigen Halterung und einer Federeinrichtung,
- Fig. 9: die zwei Andruckrollen und die Federeinrichtung aus Fig. 7 oder 8,
- Fig. 10: einen Haltearm der Halterung aus Fig. 7 oder 8,
- Fig. 11: die Druckkopfeinheit aus Fig. 1 oder 2 in Einzeldarstellung, und
- Fig. 12: eine alternative Druckkopfeinheit.

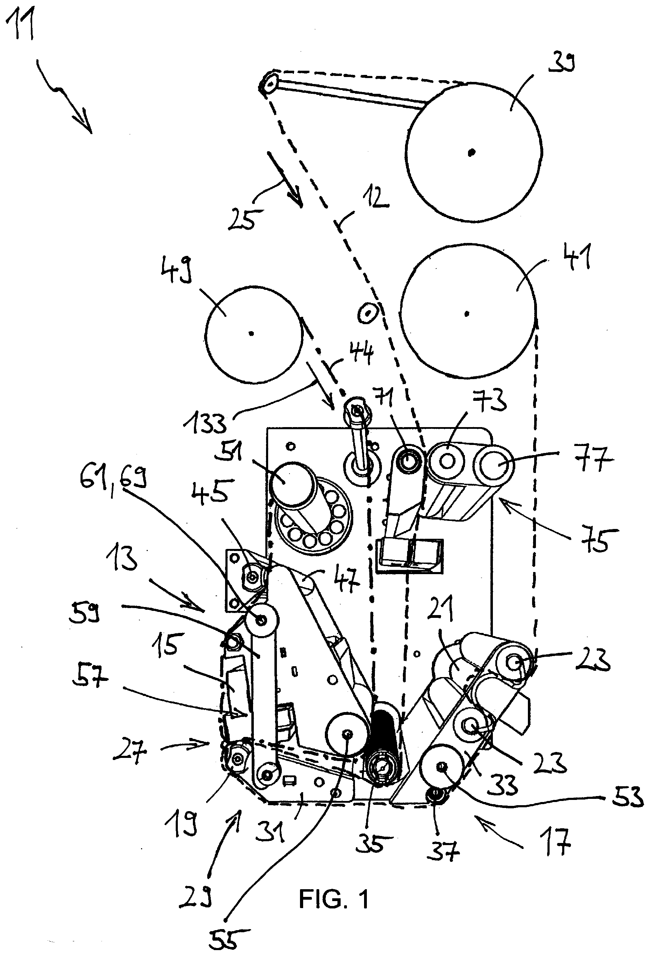

Der in Fig. 1 dargestellte Etikettendrucker 11 zum Bedrucken von auf einem Trägerband 12 aufgebrachten, auf eine Rolle gewickelten Etiketten umfasst eine Druckkopfeinheit 13 mit einem Druckkopf 15 sowie eine Führungseinheit 17 für das Trägerband 12, das ein Gegenelement 19 zu dem Druckkopf 15 aufweist. Das Trägerband 12 mit den Etiketten wird im Betrieb des Etikettendruckers 11 zwischen dem Druckkopf 15 und dem Gegenelement 19 hindurchgeführt. Das Gegenelement 19 ist dazu vorgesehen, das Trägerband 12 mit den Etiketten in der Anlage an dem Druckkopf 15 zu halten, um das Bedrucken der Etiketten zu gewährleisten.

Darüber hinaus umfasst der Etikettendrucker 11 einen Antriebsmechanismus für das Trägerband 12 mit einer angetriebenen, ortsfest gelagerten Trägerband-Zugwalze 21, der zwei nicht angetriebene Trägerband-Andruckrollen 23 zugeordnet sind, die jeweils ein Teil der Führungseinheit 17 sind. Die Trägerband-Zugwalze 21 und die beiden Trägerband-Andruckrollen 23 sind dazu vorgesehen, das Trägerband 12 entlang einer vorgegebenen Trägerband-Transportbahn zu transportieren. Hierzu wird das Trägerband 12 zwischen der Trägerband-Zugwalze 21 und der jeweiligen Trägerband-Andruckrolle 23 hindurchgeführt. Die beiden Trägerband-Andruckrollen 23 drücken dabei das Trägerband 12 jeweils gegen die Trägerband-Zugwalze 21, so dass eine ausreichende Anpress- und Vortriebskraft auf das Trägerband 12 erzeugt wird. Das Trägerband 12 wird von einer Etikettenrolle 39 abgewickelt und von einer angetriebenen, ortsfest gelagerten Trägerband-Aufwickelwalze 41 aufgewickelt.

Konkret ist zwischen den beiden Trägerband-Andruckrollen 23 ein Zwischenraum ausgebildet, in den die Trägerband-Zugwalze 21 eingreift, so dass die Trägerband-Transportbahn zwischen der Trägerband-Zugwalze 21 und der jeweiligen Trägerband-Andruckrolle 23 jeweils S-förmig verläuft, so dass in diesem Bereich insgesamt ein Doppel-S-förmiger Verlauf der Trägerband-Transportbahn resultiert. Die Trägerband-Zugwalze 21 und den beiden Trägerband-Andruckrollen 23 sind dabei in der Transportrichtung 25 des Trägerbands 12 gesehen hinter dem Drucckopf 15 und dem Gegenelement 19 und hinter einer dem Druckkopf 15 und dem Gegenelement 19 unmittelbar nachgeordneten Spendekante 27 angeordnet.

Die Führungseinheit 17 umfasst ein Winkelelement 29, das einen horizontal orientierten ersten Winkelarm 31 und einen schräg nach oben orientierten zweiten Winkelarm 33 aufweist. Dabei ist das Gegenelement 19 an dem ersten Winkelarm 31 angeordnet, und die beiden Trägerband-Andruckrollen 23 sind an dem zweiten Winkelarm 33 angeordnet. Der von den beiden Winkelarmen 31, 33 eingeschlossene Winkel besitzt einen Wert von ca. 130°. Zur Anpassung der Trägerband-Transportbahn an die winkelige Ausbildung des Winkelelements 29 umfasst die Führungseinheit 17 ferner eine Umlenkrolle 35, die innenliegend, am Scheitelpunkt des Winkelelements 29 angeordnet ist, und eine weitere Umlenkrolle 37, die außenliegend, am Scheitelpunkt des Winkelelements 29 angeordnet ist.

Der in Fig. 1 dargestellte Etikettendrucker 11 ist als ein Thermotransfer-Etikettendrucker ausgebildet, d.h. bei dem Druckkopf 15 handelt es sich um einen Thermotransfer-Druckkopf. Der Etikettendrucker 11 besitzt somit auch einen Antriebsmechanismus für ein auf eine Rolle gewickeltes Thermotransferband 44. Der Antriebsmechanismus für das Thermotransferband 44 umfasst eine angetriebene, ortsfest gelagerte Thermotransferband-Zugwalze 45, der eine nicht angetriebene Thermotransferband-Andruckrolle 47 zugeordnet ist, die ein Teil der Druckkopfeinheit 13 ist. Die Thermotransferband-Andruckrolle 47 drückt das Thermotransferband 44 gegen die Thermotransferband-Zugwalze 45, so dass eine ausreichende Anpress- und Vortriebskraft auf das Thermotransferband 44 erzeugt wird. Im Betrieb des Etikettendruckers 11 wird das Thermotransferband 44 entlang einer vorgegebenen Thermotransferband-Transportbahn transportiert und ist dabei zwischen dem Druckkopf 15 und dem Gegenelement 19 einerseits und zwischen der Thermotransferband-Zugwalze 45 und der Thermotransferband-Andruckrolle 47 andererseits hindurchgeführt. Das Thermotransferband 44 wird von einer Thermotransferbandrolle 49 abgewickelt und von einer angetriebenen, ortsfest gelagerten Thermotransferband-Aufwickelwalze 51 aufgewickelt. Die Thermotransferband-Zugwalze 45 und die Thermotransferband-Andruckrolle 47 sind in Transportrichtung 133 des Thermotransferbands 44 gesehen nach dem Druckkopf 15 und dem Gegenelement 19 angeordnet.

Wie aus Fig. 1 erkennbar ist, ist in der in Fig. 1 gezeigten Betriebsstellung der Führungseinheit 17 ein Wechsel der Etikettenrolle 39 zeitaufwändig, da das Trägerband 12 der neuen Etikettenrolle umständlich zwischen den Druckkopf 15 und das Gegenelement 19 einerseits und zwischen die Trägerband-Zugwalze 21 und die jeweilige Trägerband-Andruckrolle 23 andererseits eingefädelt werden muss, da der Abstand zwischen dem Druckkopf 15 und dem Gegenelement 19 einerseits und zwischen der Trägerband-Zugwalze 21 und jeder der beiden Trägerband-Andruckrollen 23 andererseits zumindest nicht ausreichend groß ist.

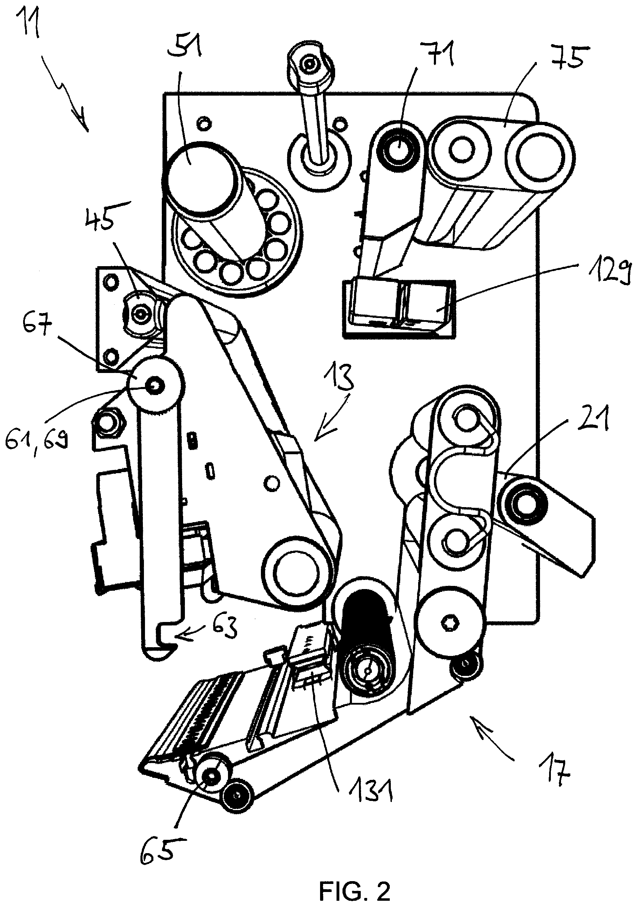

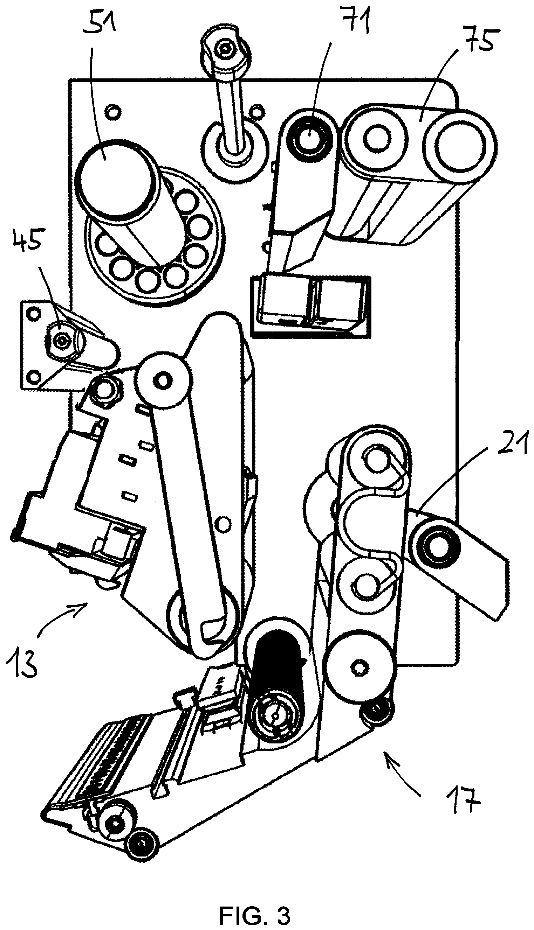

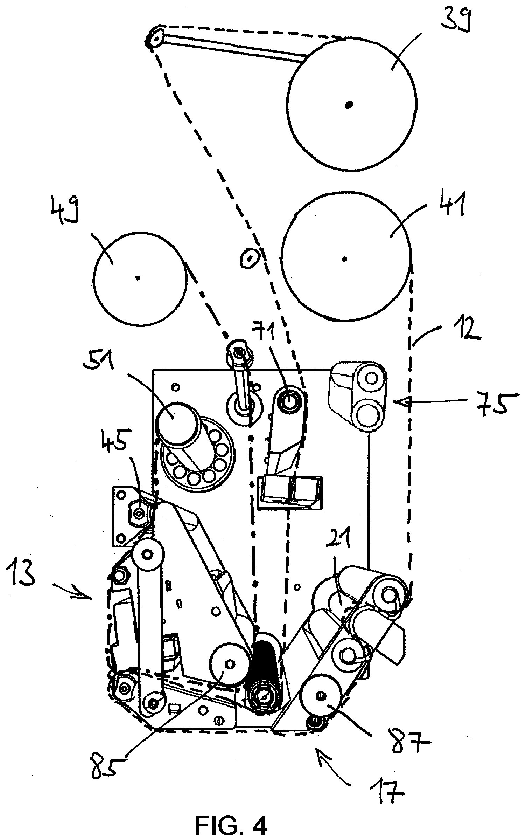

Deshalb kann die Führungseinheit 17 aus ihrer in den Fig. 1 und 4 gezeigten Betriebsstellung gegen den Uhrzeigersinn in ihre in den Fig. 2 und 3 gezeigte Einsetzstellung für das Trägerband 12 verschwenkt werden. Hierzu ist die Führungseinheit 17, insbesondere das Winkelelement 29, um eine Schwenkachse 53 verschwenkbar gelagert. In der Einsetzstellung der Führungseinheit 17 ist das Gegenelement 19 von dem Druckkopf 15 weggeschwenkt und die beiden Trägerband-Andruckrollen 23 sind von der Trägerband-Zugwalze 21 weggeschwenkt, so dass sich der Abstand zwischen dem Gegenelement 19 und dem Druckkopf 15 und zwischen den beiden Trägerband-Andruckrollen 23 und der Trägerband-Zugwalze 21 vergrößert. Insbesondere ist die Trägerband-Zugwalze 21 in der Einsetzstellung der Führungseinheit 17 - relativ gesehen - vollständig aus dem zwischen den beiden Trägerband-Andruckrollen 23 ausgebildeten Zwischenraum zurückgezogen. Das Trägerband 12 der neuen Trägerbandrolle kann dann einfach eingelegt werden.

Gleiches gilt für einen Wechsel der Thermotransferbandrolle 49. Auch dieser Wechsel ist in der in Fig. 1, 2 und 4 gezeigten Betriebsstellung der Druckkopfeinheit 13 zeitaufwändig, da das Thermotransferband 44 der neuen Thermotransferbandrolle umständlich zwischen die Thermotransferband-Zugwalze 45 und die Thermotransferband-Andruckrolle 47 hindurchgefädelt werden muss, da der Abstand zwischen der Thermotransferband-Zugwalze 45 und der Thermotransferband-Andruckrolle 47 zumindest nicht ausreichend groß ist.

Deshalb kann auch die Druckkopfeinheit 13 aus ihrer in den Fig. 1, 2 und 4 gezeigten Betriebsstellung im Uhrzeigersinn in ihre in Fig. 3 gezeigte Einsetzstellung für das Thermotransferband 44 verschwenkt werden. Hierzu ist die Druckkopfeinheit 13 um eine Druckkopfeinheit-Schwenkachse 55 verschwenkbar gelagert. In der Einsetzstellung der Druckkopfeinheit 13 ist die Thermotransferband-Andruckrolle 47 von der Thermotransferband-Zugwalze 45 weggeschwenkt, so dass sich der Abstand zwischen der Thermotransferband-Andruckrolle 47 und der Thermotransferband-Zugwalze 45 vergrößert. Das Thermotransferband 44 der neuen Thermotransferbandrolle kann dann einfach eingelegt werden.

Das Einsetzen des Thermotransferbands 44 im Bereich des Druckkopfs 15 und des Gegenelements 19 bereitet dabei keine Schwierigkeiten, weil der Druckkopf 15 und das Gegenelement 19 durch das Verschwenken der Führungseinheit 17 bereits einen ausreichend großen Abstand voneinander einnehmen. Grundsätzlich kann dies aber auch anders vorgesehen sein. Um das Thermotransferband 44 im Bereich des Druckkopfs 15 und des Gegenelements 19 dann einfach einsetzen zu können, sollte das Verschwenken der Druckkopfeinheit 13 dann bevorzugt derart erfolgen, dass der Druckkopf 15 von dem Gegenelement 19 weggeschwenkt wird, wie es bei den in den Figuren gezeigten Ausführungsformen auch der Fall ist.

Darüber hinaus ist eine Halteeinrichtung 57 vorgesehen, die die Führungseinheit 17 entweder in der Betriebsstellung hält, d.h. gegen ein Verschwenken in die Einsetzstellung sichert, oder für ein Verschwenken in die Einsetzstellung freigibt. Die Halteeinrichtung 57 umfasst einen an der Druckkopfeinheit 13 gelagerten Hebel 59, der um eine Achse 61 zwischen einer Haltestellung und einer Freigabestellung drehbar ist. In der Haltestellung wird die Führungseinheit 17 in der Betriebsstellung gesichert, in der Freigabestellung, die der Hebel 59 durch ein Verschwenken im Uhrzeigersinn erreicht, wird die Führungseinheit 17 für ein Verschwenken in die Einsetzstellung freigegeben.

Der Hebel 59 weist an seinem freien Ende eine Ausnehmung 63 auf und die Führungseinheit 17 weist einen abstehenden pilzkopfförmigen Stift 65 auf (vgl. Fig. 2). Befindet sich die Führungseinheit 17 in ihrer Betriebsstellung und der Hebel 59 in seiner Haltestellung, hakt der Hebel 59 mit der Ausnehmung 63 an dem Stift 65 der Führungseinheit 17 ein. Dadurch kann die Führungseinheit 17 in ihrer Betriebsstellung gehalten werden. Ein Verschwenken in ihre Einsetzstellung ist dann nicht möglich. Um den Hebel 59 in seiner Haltestellung festzusetzen, ist eine Rändelschraube 67 vorgesehen (vgl. Fig. 2), die von Hand betätigbar ist. Die Achse der Rändelschraube 67 fällt dabei mit der Achse 61 des Hebels 59 zusammen.

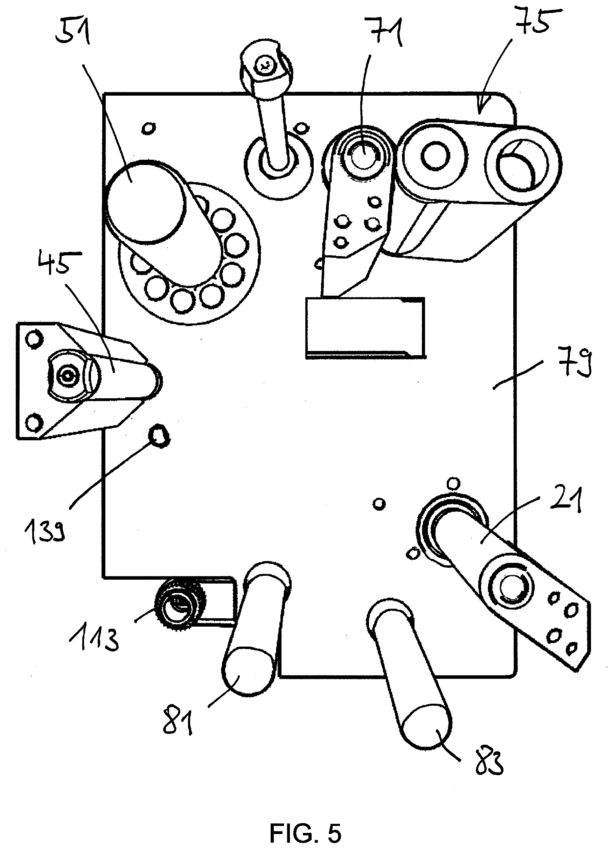

Darüber hinaus ist eine Festsetzeinrichtung in Form eines von Hand betätigbaren, die Achse 61 des Hebels 59 bildenden Blockierstifts 69 vorgesehen (vgl. Fig. 2), durch den die Druckkopfeinheit 13 in ihrer Betriebsstellung festsetzbar ist. Somit ist auch die Druckkopfeinheit 13 durch eine technische Maßnahme in ihrer Betriebsstellung sicherbar. Der Blockierstift 69 ist entlang seiner Längsachse zwischen einer Sperrstellung und einer Entsperrstellung verstellbar. In der Sperrstellung greift der Blockierstift 69 in eine in einem hochkant aufgestellten Träger 79 des Etikettendruckers 11 ausgebildete Sperröffnung 139 ein (vgl. Fig. 5), so dass ein Verschwenken der Druckkopfeinheit 13 unterbunden ist. Wird der Blockierstift 69 hingegen entlang seiner Längsachse entgegen der Vorspannung einer nicht dargestellten Feder nach vorne in seine Entsperrstellung verstellt, insbesondere gezogen, wird die Druckkopfeinheit 13 freigegeben. Die Druckkopfeinheit 13 kann dann in ihre Einsetzstellung verschwenkt werden.

Ferner umfasst der Antriebsmechanismus für das Trägerband 12 eine weitere angetriebene, ortsfest gelagerte Trägerband-Zugwalze 71 und eine der weiteren Trägerband-Zugwalze 71 zugeordnete, nicht angetriebene weitere Trägerband-Andruckrolle 73, die in Transportrichtung des Trägerbands 12 gesehen vor dem Druckkopf 15 und dem Gegenelement 19 angeordnet sind. Die weitere Trägerband-Andruckrolle 73 drückt dabei das Trägerband 12 gegen die weitere Trägerband-Zugwalze 71, so dass eine Anpress- und Vortriebskraft auf das Trägerband 44 erzeugt wird.

Dadurch, dass die weitere Trägerband-Zugwalze 71 und die weitere Trägerband-Andruckrolle 73 dem Druckkopf 15 und dem Gegenelement 19 vorgeschaltet sind, kann das Trägerband 12 mit einer höheren Geschwindigkeit entlang der Trägerband-Transportbahn transportiert werden, als dies ohne die weitere Trägerband-Zugwalze 71 und ohne die weitere Trägerband-Andruckrolle 73 der Fall wäre. Die weitere Trägerband-Zugwalze 71 und die weitere Trägerband-Andruckrolle 73 liegen nämlich näher an der Etikettenrolle 39 als die Trägerband-Zugwalze 21 und die Trägerband-Andruckrollen 23 und können das Trägerband 12 daher leichter von der Etikettenrolle 39 abziehen. Insbesondere muss beim Abziehen keine Kraft für die scharfe Umlenkung des Trägerbands 12 an der Spendekante 27 aufgewandt werden. Der Etiketten-Durchsatz kann dadurch erhöht werden.

Um das Trägerband 12 bei einem Wechsel der Etikettenrolle 39 nicht umständlich zwischen der weiteren Trägerband-Zugwalze 71 und der weiteren Trägerband-Andruckrolle 73 einfädeln zu müssen, ist die weitere Trägerband-Andruckrolle 73 ein Teil eines Schwenkelements 75, das um eine weitere Schwenkachse 77 zwischen einer Betriebsstellung (vgl. die Fig. 1 bis 3) und einer Einsetzstellung für das Trägerband 12 (vgl. Fig. 4) verschwenkbar gelagert ist. Analog zu der vorstehend im Hinblick auf die verschwenkbare Führungseinheit 17 sowie die Trägerband-Zugwalze 21 und die Trägerband-Andruckrollen 23 beschriebenen Situation ist in der Betriebsstellung des Schwenkelements 75 das Trägerband 12 zwischen der weiteren Trägerband-Zugwalze 71 und der weiteren Trägerband-Andruckrolle 73 hindurchführbar und entlang der Trägerband-Transportbahn transportierbar und ist in der Einsetzstellung für das Trägerband 12 die weitere Trägerband-Andruckrolle 73 von der weiteren Trägerband-Zugwalze 71 weggeschwenkt.

Das Schwenkelement 75 wird zum "Öffnen" der Trägerband-Transportbahn aus der in den Fig. 1 bis 3 gezeigten Betriebsstellung nach oben und zum "Schließen" der Trägerband-Transportbahn aus der in Fig. 4 gezeigten Einsetzstellung nach unten verschwenkt. Das Trägerband 12 wird durch die im Uhrzeigersinn drehende weitere Trägerband-Zugwalze 71 nach unten transportiert, wie es in Fig. 1 anhand der Transportrichtung 25 des Trägerbands 12 dargestellt ist. Der Drehsinn der Verschwenkbewegung des Schwenkelements 75 aus der Einsetzstellung in die Betriebsstellung ist daher dem Drehsinn der weiteren Trägerband-Zugwalze 71 entgegengesetzt. Dies bedeutet letztlich, dass im Betrieb des Etikettendruckers 11 das Trägerband 12 das Schwenkelement 75 in Richtung der Betriebsstellung zieht und somit einem Verschwenken in Richtung der Einsetzstellung entgegenwirkt.

Das Schwenkelement 75 mit der weiteren Trägerband-Andruckrolle 73 kann von dem Etikettendrucker 11 abnehmbar sein, und die weitere Trägerband-Zugwalze 71 kann von ihrem Motor mechanisch entkoppelt und als bloße Umlenkrolle verwendbar sein. Der Etikettendrucker 11 kann dann in eine Variante ohne den weiteren Antrieb umgerüstet werden. Alternativ kann die Variante ohne den weiteren Antrieb auch bereits von Werk aus angeboten werden. In beiden Fällen ist es bevorzugt, wenn der Etikettendrucker 11 einen ersten Betriebsmodus und einen zweiten Betriebsmodus aufweist. Der erste Betriebsmodus wird gewählt, wenn der weitere Antrieb, d.h. die weitere Trägerband-Zugwalze 71 und die weitere Trägerband-Andruckrolle 73, vorhanden ist bzw. sind. Es handelt sich hierbei dann um einen Hochgeschwindigkeitsmodus. Der zweite Betriebsmodus wird gewählt, wenn der weitere Antrieb fehlt, d.h. wenn die weitere Trägerband-Andruckrolle 73 abgenommen ist oder von vorne herein fehlt und die weitere Trägerband-Zugwalze 71 von einem zugehörigen Motor mechanisch abgekoppelt ist oder dieser von vorne herein fehlt. Es handelt sich hierbei dann um einen Normalgeschwindigkeitsmodus.

Darüber hinaus kann der Etikettendrucker 11 einen Betriebsmodus aufweisen, in dem der Druckkopf 15 alternierend zwischen einer auf das Trägerband 12 abgesenkten Position und einer von dem Trägerband 12 abgehobenen Position verstellt wird. In der abgesenkten Position kann ein Etikett in dem jeweiligen Druckbereich bedruckt werden, und die abgehobene Position wird zwischen dem Bedrucken zweier aufeinander folgender Etiketten in den jeweiligen Druckbereichen eingenommen. In den Bereichen, in denen das jeweilige Etikett nicht bedruckt wird, kann der Druckkopf 15 die abgehobene Position einnehmen. Dabei werden in der abgehobenen Position des Druckkopfs 15 die Trägerband-Zugwalze 21, die weitere Trägerband-Zugwalze 71 und die Trägerband-Aufwickelwalze 41 mit einer höheren Drehgeschwindigkeit betrieben werden als bei abgesenkter Position des Druckkopfs 15. Hierzu muss das Trägerband 12 zwischen dem Bedrucken aufeinander folgender Druckbereiche alternierend abgebremst und beschleunigt werden. Dies kann insbesondere dann sinnvoll sein, wenn Schmucketiketten verwendet werden, die über große Bereiche hinweg nicht bedruckt werden. Durch das Vorsehen der weiteren Trägerband-Zugwalze 71 und der weiteren Trägerband-Andruckrolle 73 kann das Trägerband 12 stärker als sonst möglich beschleunigt werden. Das Abheben des Druckkopfs 15 ist insbesondere dann möglich, wenn als Gegenelement 19 eine wie nachstehend erläuterte Gleitplatte 19" (vgl. die Fig. 2, 3 und 8) verwendet wird.

Die Druckkopfeinheit 13 und die Führungseinheit 17 sind jeweils als austauschbares Modul ausgebildet und können jeweils von dem Etikettendrucker 11 abgenommen werden, wie es in Fig. 5 dargestellt ist. Hierzu stehen von der Trägerplatte 79 eine erste Aufnahme 81 für die Druckkopfeinheit 13 und eine zweite Aufnahme 83 für die Führungseinheit 17 ab. Die beiden Aufnahmen 81, 83 sind jeweils als horizontal orientierter Haltedorn in Form eines Rundstabs ausgebildet. Mit dem jeweiligen einen Ende sind die beiden Aufnahmen 81, 83 an der Trägerplatte 79 befestigt, und von dem jeweiligen anderen, freitragenden Ende her können die Druckkopfeinheit 13 bzw. die Führungseinheit 17 auf die Aufnahmen 81, 83 aufgeschoben werden.

Die Druckkopfeinheit 13 kann dabei unabhängig davon, ob die Führungseinheit 17 von der zweiten Aufnahme 83 aufgenommen oder davon abgenommen ist, von der ersten Aufnahme 81 aufgenommen werden, und umgekehrt, d.h. die Führungseinheit 17 kann unabhängig davon, ob die Druckkopfeinheit 13 von der ersten Aufnahme 81 aufgenommen oder abgenommen ist, von der zweiten Aufnahme 83 aufgenommen werden. Um die Druckkopfeinheit 13 bzw. die Führungseinheit 17 an der jeweiligen Aufnahme 81, 83 zu befestigen, ist jeweils eine Rändelschraube 85, 87 vorgesehen (vgl. Fig. 4), die per Hand lösbar ist, so dass die Druckkopfeinheit 13 und die Führungseinheit 17 schnell und unkompliziert befestigbar und abnehmbar sind.

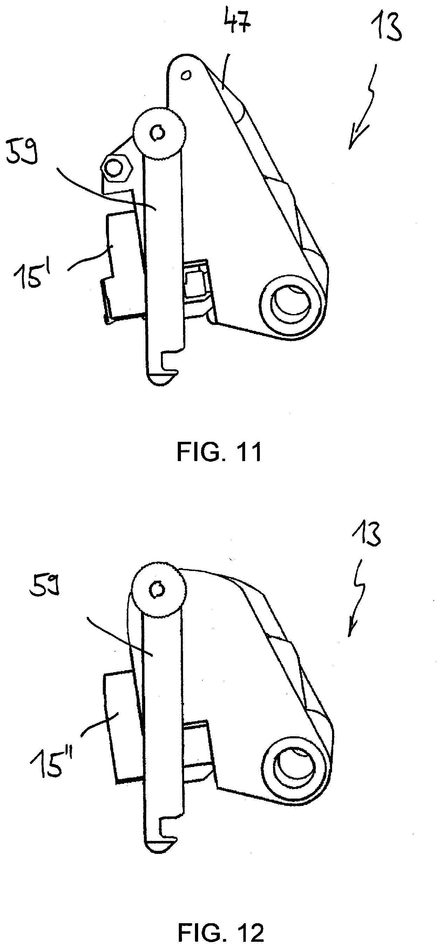

Für den Etikettendrucker 11 stehen zwei voneinander verschiedene Druckkopfeinheiten 13 und zwei voneinander verschiedene Führungseinheiten 17 zur Verfügung, wobei der Etikettendrucker 11, insbesondere die beiden Aufnahmen 81, 83, im zusammengesetzten und betriebsfähigen Zustand eine der beiden Druckkopfeinheiten 13 und eine der beiden Führungseinheiten 17 aufnimmt bzw. aufnehmen. Die erste der beiden Druckkopfeinheiten 13 besitzt einen Druckkopf 15, der als Thermotransfer-Druckkopf 15' ausgebildet ist, wie er in den Fig. 1 bis 4 und 11 gezeigt ist. Die zweite der beiden Druckkopfeinheiten 13 besitzt einen Druckkopf 15, der als Thermodirekt-Druckkopf 15" ausgebildet ist, wie er in Fig. 12 gezeigt ist. Die Druckkopfeinheit 13 mit dem Thermodirekt-Druckkopf 15" besitzt keine Thermotransferband-Andruckrolle. Die erste der beiden Führungseinheiten 17 besitzt als Gegenelement 19 eine angetriebene Druckwalze 19', wie sie in den Fig. 1, 4 und 7 gezeigt ist. Die zweite der beiden Führungseinheiten 17 besitzt als Gegenelement 19 eine mit einem Dämpfungselement 89 versehene Gleitplatte 19" aus Metall, wie sie bereits vorstehend erwähnt und in den Fig. 2, 3 und 8 gezeigt ist. Das Dämpfungselement 89 ist ein zwischen 0,5 mm und 1 mm dicker Filz, der dazu vorgesehen ist, um etwaige Toleranzen der Gleitplatte19" und des Drucckopfs 15 auszugleichen und eine Beschädigung des Druckkopfs 15 beim Absenken in Richtung der harten Gleitplatte 19" zu vermeiden. Zur Fixierung ist das Dämpfungselement 89 mit einem Kunststoffteil 137 heißverstemmt.

Der Thermotransfer-Druckkopf 15' kann zusammen mit dem Thermotransferband 44 betrieben werden, um im Thermotransferdruck-Verfahren zu drucken. Derartige Drucke sind besonders beständig. Der Thermotransfer-Druckkopf 15' kann grundsätzlich aber auch im Thermodirekt-Verfahren, d.h. ohne Thermotransferband 44, drucken. Der Thermotransfer-Druckkopf 15' ist somit flexibel einsetzbar, aber auch teuer. Der Thermodirekt-Druckkopf 15" kann nur im Thermodirekt-Verfahren drucken und ist daher günstiger. Die Druckwalze 19' ist aufgrund ihres Durchmesser in einem bestimmten Abstand von der Spendekante 27 angeordnet. Daher kann es sein, dass zu dem Zeitpunkt, an dem sich ein vorlaufendes Etikett an der Spendekante 27 von dem Trägerband 12 löst, ein nachlaufendes Etikett bereits teilweise unter dem Druckkopf 15 hindurchgelaufen ist, so dass ein Near-Edge-Druck an der vorderen Etikettenkante ohne weitere Maßnahmen nicht möglich ist. Um dies zu verhindern, muss entweder das Trägerband - unter Geschwindigkeitsverlust - kurzzeitig reversiert werden oder die Etiketten müssen - verbunden mit höheren Kosten - in einem größeren Abstand zueinander angeordnet werden. Dieses Problem, dass der Druckkopf 15 zu weit von der Spendekante 27 beabstandet ist, stellt sich bei der Gleitplatte 19" jedoch nicht, so dass hier Near-Edge-Drucke ohne weiteres möglich sind. Die Gleitplatte 19" mit dem Filz ist jedoch weniger langlebig und damit teurer.

Mit den zwei voneinander verschiedenen Druckkopfeinheiten 13 und den zwei voneinander verschiedenen Führungseinheiten 17 liegt ein Satz von voneinander verschiedenen Zubehörteilen für den Etikettendrucker 11 vor. Somit ist für ein Bedrucken mit unterschiedlicher Ausstattung (Thermotransfer-Druckkopf oder Thermodirekt-Druckkopf, Druckwalze oder Gleitplatte) nur ein einzelner Etikettendrucker 11 erforderlich. Insgesamt sind so vier voneinander verschiedene Konstellationen möglich, die, insbesondere abhängig von den jeweiligen Etikettenart und/oder dem gewünschten Bedruck, wahlweise genutzt werden können. Der Etikettendrucker 11 ist damit flexibel konfigurierbar.

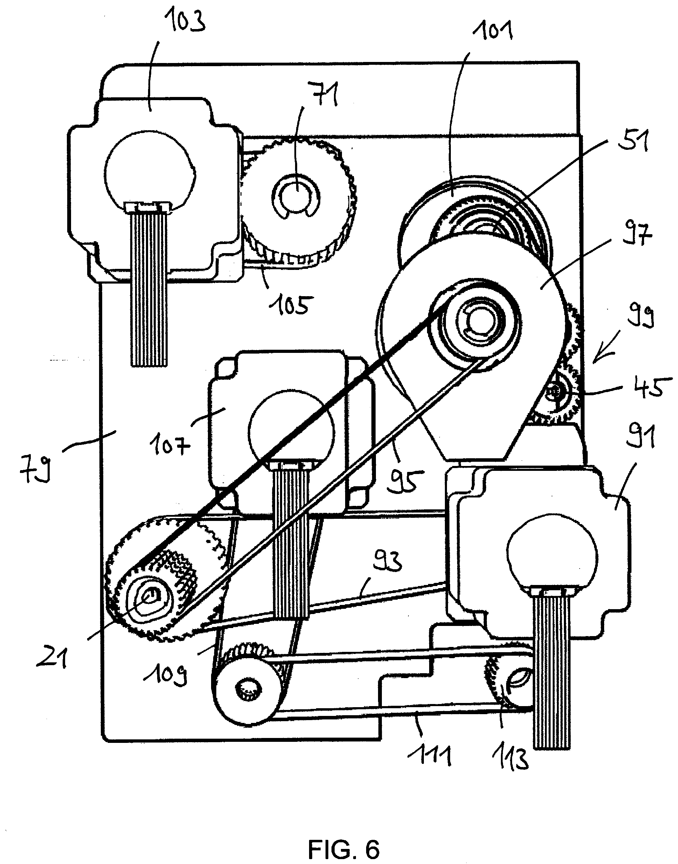

Die Trägerband-Aufwickelwalze 41 wird durch einen nicht gezeigten, eigenen Motor angetrieben. Die Antriebseinrichtung der übrigen Walzen 19', 21, 45, 51, 71 des Etikettendruckers 11 hingegen ist aus der Fig. 6 ersichtlich, die eine Rückansicht der Trägerplatte 79 zeigt.

Die Antriebseinrichtung umfasst zunächst einen ersten Motor 91, der über einen Zahnriemen 93 die Trägerband-Zugwalze 21 antreibt. Der erste Motor 91 treibt mittelbar über die Trägerband-Zugwalze 21, einen weiteren Zahnriemen 95, eine Rutschkupplung 97 und ein Getriebe 99 auch die Thermotransferband-Zugwalze 45 an. Von dem Getriebe 99 wird ferner unter Zwischenschaltung einer weiteren Rutschkupplung 101 auch die Thermotransferband-Aufwickelwalze 51 angetrieben. Bei dem ersten Motor 91 handelt es sich daher um einen gemeinsamen Motor für die Trägerband-Zugwalze 21, die Thermotransferband-Zugwalze 45 und die Thermotransferband-Aufwickelwalze 51, die damit mechanisch miteinander synchronisiert sind.

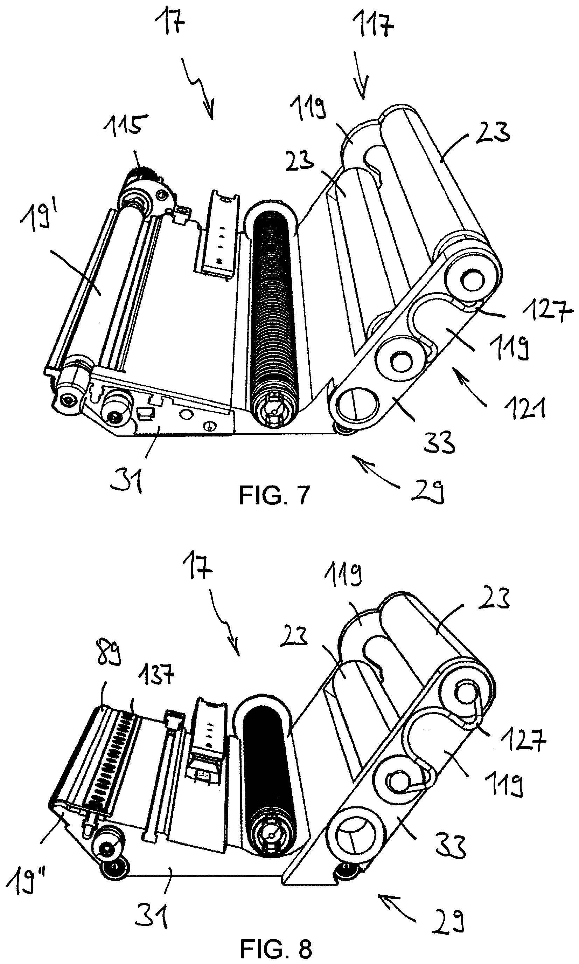

Ferner umfasst die Antriebseinrichtung einen zweiten Motor 103, der über einen weiteren Zahnriemen 105 die weitere Trägerband-Zugwalze 71 antreibt, sofern der weitere Antrieb mit der weiteren Trägerband-Zugwalze 71 und der weiteren Trägerband-Andruckrolle 73 vorhanden ist, und einen dritten Motor 107, der über zwei hintereinander geschaltete weitere Zahnriemen 109, 111 und zwei nachfolgende, ineinander eingreifende Zahnräder 113, 115 die Druckwalze 19' antreibt, sofern die Führungseinheit 17 mit der Druckwalze 19' eingesetzt ist. Das Zahnrad 113 ist an der Rückseite der Trägerplatte 79 angebracht (vgl. die Fig. 5 und 6), und das Zahnrad 115 an der Führungseinheit 17 mit der Druckwalze 19' (vgl. Fig. 7). Ist der weitere Antrieb nicht vorhanden, kann auch der zweite Motor 103 weggelassen werden. Ist die Führungseinheit 17 mit der Gleitplatte 19" eingesetzt, ist kein Zahnrad 115 vorgesehen (vgl. Fig. 8).

Bei dem zweiten Motor 103 handelt es sich um einen eigenen Motor der weiteren Trägerband-Zugwalze 71, und bei dem dritten Motor 107 handelt es sich um einen eigenen Motor der Druckwalze 19'. Grundsätzlich handelt es sich bei einem eigenen Motor um einen Motor, der nur eine Walze antreibt. Somit werden die Trägerband-Zugwalze 21, die weitere Trägerband-Zugwalze 71, die Druckwalze 19' und die Trägerband-Aufwickelwalze 41 von voneinander verschiedenen Motoren 91, 103, 107 angetrieben, die jedoch durch eine entsprechende Regelung elektronisch miteinander synchronisiert sind, um einen aufeinander abgestimmten Betrieb der Trägerband-Zugwalze 21, der weiteren Trägerband-Zugwalze 71, der Druckwalze 19' und der Trägerband-Aufwickelwalze 41 zu gewährleisten.

In Fig. 7 ist die Führungseinheit 17 mit der Druckwalze 19' gezeigt, und in Fig. 8 ist die Führungseinheit 17 mit der Gleitplatte 19" gezeigt. Der in beiden Fällen identische zweite Winkelarm 33 des Winkelelements 29 weist eine Halterung 117 mit zwei gabelförmig angeordneten Haltearme 119 auf, zwischen denen die beiden Trägerband-Andruckrollen 23 jeweils mit ihren beiden axialen Enden linear verschiebbar gelagert sind. In der Betriebsstellung der Führungseinheit 17 ist die Trägerband-Zugwalze 21 zwischen den beiden Trägerband-Andruckrollen 23 angeordnet. Die Trägerband-Andruckrollen 23 sind dabei jeweils senkrecht zu ihrer Rotationsachse, die jeweils parallel zu der Drehachse der Trägerband-Zugwalze 21 verläuft, verschiebbar gelagert, und zwar in der Betriebsstellung der Führungseinheit 17 in einer Verschieberichtung auf die Trägerband-Zugwalze 21 zu.

Zur Ausübung einer Anpresskraft auf das Trägerband 12 in der Betriebsstellung der Führungseinheit 17 ist eine Federeinrichtung 121 vorgesehen (vgl. die Fig. 7 bis 9), die die beiden Trägerband-Andruckrollen 23 jeweils in ihrer Verschieberichtung und damit aufeinander zu vorspannt, insbesondere zieht. Durch die Federeinrichtung 121 kann automatisch eine insbesondere passende Anpress- und damit Vorschubkraft auf das Trägerband 12 erzeugt werden.

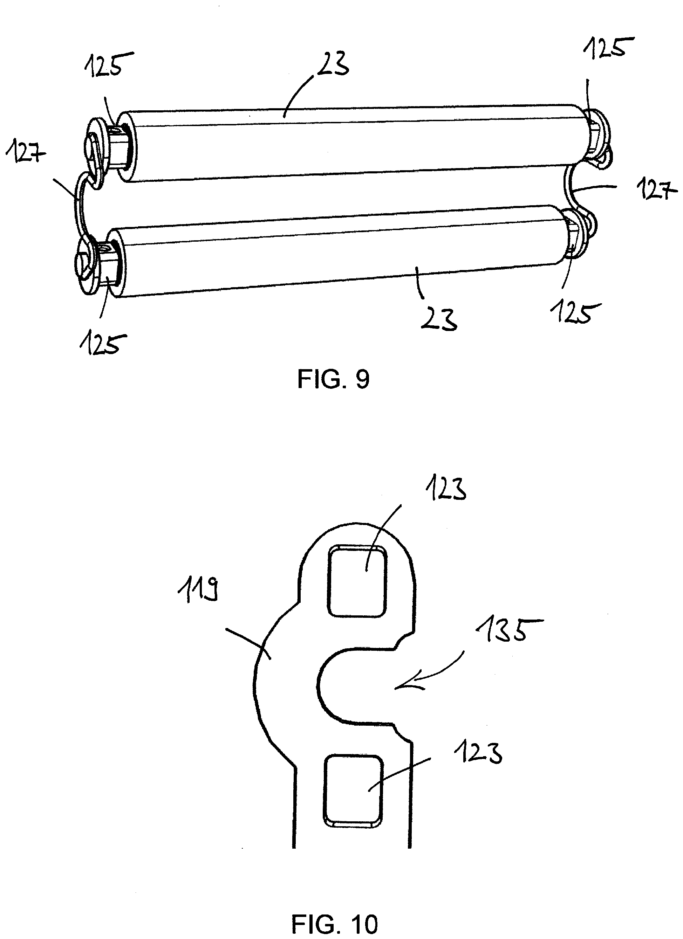

In den beiden Haltearmen 119, von denen in Fig. 10 der in den Fig. 7 und 8 hintere Haltearm 119 dargestellt ist, sind jeweils zwei Führungsbahnen 123 vorgesehen, die jeweils als ein rechteckförmiger, gerader Schlitz ausgebildet sind. In den Führungsbahnen 123, die die Haltearme 119 durchsetzen, sind die beiden Trägerband-Andruckrollen 23 mit ihren beiden axialen Enden jeweils verschiebbar geführt. Hierzu sind die axialen Enden der Trägerband-Andruckrollen 23 jeweils mit einem Gleitstein 125 versehen (vgl. Fig. 9), der in der jeweiligen Führungsbahn 123 verschiebbar geführt ist. Der in Fig. 10 dargestellte und in den Fig. 7 und 8 hintere Halterarm 119 weist in Vergleich zu dem in den Fig. 7 und 8 vorderen Haltearm 119 eine Aussparung 135 auf, um in der Betriebsstellung der Führungseinheit 17 ein Durchgreifen der Trägerband-Zugwalze 21 zu ermöglichen.

Konkret umfasst die Federeinrichtung 121 zwei Zugfedern 127, die jeweils außerhalb des zwischen den beiden Haltearmen 119 ausgebildeten Zwischenraums und jeweils an einen der beiden Haltearme 119 anliegend angeordnet sind. In den Fig. 7 und 8 ist lediglich eine der beiden Zugfedern 127 erkennbar. Die eine der beiden Zugfedern 127 greift dabei an dem einen der beiden axialen Enden der einen Trägerband-Andruckrolle 23 und an dem auf derselben Seite liegenden axialen Ende der anderen Trägerband-Andruckrolle 23 an, und die andere Zugfeder 127 an den anderen beiden axialen Enden. Die Zugfedern 127 sind dabei jeweils als ein langgestrecktes Drahtbiegeteil ausgebildet, das in einer Ebene verläuft und nicht gewunden ist, d.h. keine Wicklungen aufweist. An ihren beiden Drahtenden ist die jeweilige Zugfeder 127 hakenförmig ausgebildet, so dass sie einfach an den beiden auf derselben Seite liegenden axialen Enden der beiden Trägerband-Andruckrollen 23 befestigt werden kann.

Beim Verschwenken der Führungseinheit 17 aus der in den Fig. 2 und 3 gezeigten Einsetzstellung in die in den Fig. 1 und 4 gezeigte Betriebsstellung werden die beiden Trägerband-Andruckrollen 23 durch die Trägerband-Zugwalze 21 und gegen die Vorspannung der Federeinrichtung 121 auseinander gedrückt, d.h. der Abstand zwischen den beiden Trägerband-Andruckrollen 23 vergrößert sich. Die Betriebsstellung der Führungseinheit 17 kann dabei insbesondere dann erreicht werden, wenn sich die Trägerband-Zugwalze 21 in etwa auf Höhe der zu den beiden Rotationsachsen der beiden Trägerband-Andruckrollen 23 senkrechten Verbindungsgeraden befindet, oder sie kann bereits zuvor erreicht werden. Es kann aber auch vorgesehen sein, dass die Trägerband-Zugwalze 21 - relativ gesehen - über diese Verbindungsgerade hinaus in den Zwischenraum hineingeschwenkt wird. Die Verschwenkbewegung der Führungseinheit 17 gliedert sich dann in eine erste Phase, in der die Trägerband-Zugwalze 21 - relativ gesehen - bis zu der Verbindungsgeraden verschwenkt wird, und in eine an die erste Phase anschließende zweite Phase, in der die beiden Trägerband-Andruckrollen 23 durch die vorgespannte Federeinrichtung 121 wieder aufeinander zu verschoben werden, wodurch sich der der Abstand zwischen den beiden Trägerband-Andruckrollen 23 wieder verringert. Es findet somit eine Art Verrastung zwischen den beiden Trägerband-Andruckrollen 23 und der Trägerband-Zugwalze 21 statt, wodurch die Führungseinheit 17 in der Betriebsstellung gehalten werden kann.

Darüber hinaus umfasst die Führungseinheit 17 einen Sensor 129 zur Erkennung der Etiketten, insbesondere einen optischen Sensor, insbesondere eine Lichtschranke (vgl. Fig. 2), der bzw. die in Transportrichtung 25 des Trägerbands 12 gesehen zwischen der weiteren Trägerband-Zugwalze 71 und der weiteren Trägerband-Andruckrolle 73 einerseits und dem Druckkopf 15 und dem Gegenelement 19 andererseits angeordnet ist. Der Etikettensensor 129 ist dafür vorgesehen, die Vorderkanten der Etiketten zu erkennen, um den Antrieb des Trägerbands 12 mit der Steuerung für den Druckkopf 15 zu synchronisieren. Mit dem Etikettensensor 129 können insbesondere weiße Etiketten, Schmucketiketten und transparente Etiketten mit Blackmarks auf dem Trägerband 12 detektiert werden.

Transparente Etiketten, die auf einem Trägerband 12 ohne Blackmarks aufgebracht sind, hingegen können von dem Etikettensensor 129 nicht erkannt werden. Zur Erkennung derartiger Etiketten ist ein weiterer Sensor 131, nämlich ein Ultraschall-Sensor, vorgesehen (vgl. Fig. 2), der in Transportrichtung 25 des Trägerbands 12 gesehen zwischen der weiteren Trägerband-Zugwalze 71 und der weiteren Trägerband-Andruckrolle 73 einerseits und dem Druckkopf 15 und dem Gegenelement 19 andererseits angeordnet ist.

Für einen Wechsel der Etikettenrolle 39 wird ausgehend von der Betriebsstellung des Etikettendruckers in Fig. 1 zunächst die Rändelschraube 67 gelöst, dann wird der Hebel 59 im Uhrzeigersinn in seine Freigabestellung verschwenkt, um die Verhakung mit der Führungseinheit 17 zu lösen, und dann wird die Führungseinheit 15 gegen den Uhrzeigersinn in ihre Einsetzstellung für das Trägerband 12 verschwenkt. Sofern der weitere Antrieb mit der weitere Trägerband-Zugwalze 71 und der weitere Trägerband-Andruckrolle 73 vorhanden ist, muss zusätzlich das Schwenkelement 75 im Uhrzeigersinn in seine Einsetzstellung für das Trägerband 12 verschwenkt werden. Dies kann zu jedem beliebigen Zeitpunkt erfolgen. Anschließend kann das verbrauchte Trägerband 12 aus dem Etikettendrucker 11 entnommen und das neue Trägerband einfach von vorne in den Etikettendrucker 11 eingesetzt bzw. eingelegt werden.

Für einen Wechsel der Thermotransferbandrolle 49 werden zunächst die vorstehend erläuterten Schritte für einen Wechsel der Etikettenrolle 39 vorgenommen, ggf. mit Ausnahme des Verschwenkens des optionalen Schwenkelements 75. Anschließend wird der Blockierstift 69 nach vorne gezogen und die Druckkopfeinheit 13 kann im Uhrzeigersinn in ihre Einsetzstellung für das Thermotransferband 44 verschwenkt werden. Anschließend kann das verbrauchte Thermotransferband 44 aus dem Etikettendrucker 11 entnommen und das neue Thermotransferband einfach von vorne in den Etikettendrucker 11 eingesetzt bzw. eingelegt werden.

Für einen Wechsel bzw. Austausch der Führungseinheit 17 werden zunächst die vorstehend erläuterten Schritte für einen Wechsel der Etikettenrolle 39 vorgenommen, ggf. mit Ausnahme des Verschwenkens des optionalen Schwenkelements 75. Anschließend wird die Rändelschraube 87 gelöst und die Führungseinheit 17 kann nach vorne abgezogen und durch eine andere Führungseinheit ersetzt werden.

Für einen Wechsel bzw. Austausch der Druckkopfeinheit 13 werden zunächst die vorstehend erläuterten Schritte für einen Wechsel der Thermotransferbandrolle 49 vorgenommen, ggf. mit Ausnahme des Verschwenkens des optionalen Schwenkelements 75. Anschließend wird die Rändelschraube 85 gelöst und die Drucckopfeinheit 13 kann nach vorne abgezogen und durch eine andere Druckkopfeinheit ersetzt werden.

Der vorstehend erläuterte Etikettendrucker ist einfach zu bedienen und flexibel einsetzbar.

### Bezugszeichenliste

- 11: Etikettendrucker
- 12: Trägerband
- 13: Druckkopfeinheit
- 15: Druckkopf
- 15': Thermotransfer-Druckkopf
- 15": Thermodirekt-Druckkopf
- 17: Führungseinheit
- 19: Gegenelement
- 19': Druckwalze
- 19": Gleitplatte
- 21: Trägerband-Zugwalze
- 23: Trägerband-Andruckrolle
- 25: Transportrichtung
- 27: Spendekante
- 29: Winkelelement
- 31, 33: Winkelarm
- 35, 37: Umlenkrolle
- 39: Etikettenrolle
- 41: Trägerband-Aufwickelwalze
- 44: Thermotransferband
- 45: Thermotransferband-Zugwalze
- 47: Thermotransferband-Andruckrolle
- 49: Thermotransferbandrolle
- 51: Thermotransferband-Aufwickelwalze
- 53: Schwenkachse
- 55: Druckkopfeinheit-Schwenkachse
- 57: Halteeinrichtung
- 59: Hebel
- 61: Achse
- 63: Ausnehmung
- 65: Stift
- 67: Rändelschraube
- 69: Blockierstift
- 71: weitere Trägerband-Zugwalze
- 73: weitere Trägerband-Andruckrolle
- 75: Schwenkelement
- 77: weitere Schwenkachse
- 79: Trägerplatte
- 81: erste Aufnahme
- 83: zweite Aufnahme
- 85: Rändelschraube
- 87: Rändelschraube
- 89: Dämpfungselement
- 91: erster Motor
- 93: Zahnriemen
- 95: weiteren Zahnriemen
- 97: Rutschkupplung
- 99: Getriebe
- 101: weitere Rutschkupplung
- 103: zweiter Motor
- 105: weiterer Zahnriemen
- 107: dritter Motor
- 109: weiterer Zahnriemen
- 111: weiterer Zahnriemen
- 113: Zahnrad
- 115: Zahnrad
- 117: Halterung
- 119: Haltearm
- 121: Federeinrichtung
- 123: Führungsbahn
- 125: Gleitstein
- 127: Zugfeder
- 129: optischer Sensor
- 131: Ultraschall-Sensor
- 133: Transportrichtung
- 135: Aussparung
- 137: Kunststoffteil
- 139: Sperröffnung

## Patentansprüche

1. Etikettendrucker zum Bedrucken von auf einem Trägerband (12) aufgebrachten, insbesondere auf Rolle gewickelten Etiketten, umfassend
eine Druckkopfeinheit (13) mit einem Druckkopf (15),
einen Antriebsmechanismus für das Trägerband (12) mit einer angetriebenen Trägerband-Zugwalze (21), und
eine Führungseinheit (17) für das Trägerband (12), die um eine Schwenkachse (53) zwischen einer Betriebsstellung und einer Einsetzstellung für das Trägerband (12) verschwenkbar gelagert ist,
**dadurch gekennzeichnet, dass** die Führungseinheit (17) ein Gegenelement (19) zu dem Druckkopf (15), das dazu ausgebildet ist, in der Betriebsstellung das Trägerband (12) mit den Etiketten in Anlage an dem Druckkopf (15) zu halten, insbesondere eine angetriebene Druckwalze (19'), und wenigstens eine der Trägerband-Zugwalze (21) zugeordnete, nicht angetriebene Trägerband-Andruckrolle (23) umfasst,
wobei in der Betriebsstellung der Führungseinheit (17) das Trägerband (12) zwischen dem Druckkopf (15) und dem Gegenelement (19) sowie zwischen der Trägerband-Zugwalze (21) und der jeweiligen Trägerband-Andruckrolle (23) hindurchführbar und insbesondere entlang einer vorgegebenen Trägerband-Transportbahn transportierbar ist, und
wobei in der Einsetzstellung der Führungseinheit (17) das Gegenelement (19) von dem Druckkopf (15) und die jeweilige Trägerband-Andruckrolle (23) von der Trägerband-Zugwalze (21) weggeschwenkt ist.

2. Etikettendrucker nach Anspruch 1,
**dadurch gekennzeichnet,**
**dass** die Führungseinheit (17) ein zweiarmiges Winkelelement (29) umfasst, das um die Schwenkachse (53) verschwenkbar gelagert ist, wobei das Gegenelement (19) an einem ersten Winkelarm (31) und die jeweilige Trägerband-Andruckrolle (23) an einem zweiten Winkelarm (33) angeordnet ist, wobei bevorzugt der von den beiden Winkelarmen (31, 33) eingeschlossene Winkel einen Wert besitzt, der zwischen 90° und 170°, insbesondere zwischen 110° und 150°, liegt.

3. Etikettendrucker nach Anspruch 1 oder 2,
**dadurch gekennzeichnet,**
**dass** die jeweilige Trägerband-Andruckrolle (23) senkrecht zu ihrer Rotationsachse, welche parallel zu der Drehachse der Trägerband-Zugwalze (21) verläuft, und in der Betriebsstellung der Führungseinheit (17) in einer Verschiebrichtung auf die Trägerband-Zugwalze (21) zu, insbesondere linear, verschiebbar gelagert ist, wobei zur Ausübung einer Anpresskraft auf das Trägerband (12) eine Federeinrichtung (121) vorgesehen ist, die die jeweilige Trägerband-Andruckrolle (23) in die Verschieberichtung vorspannt, insbesondere zieht.

4. Etikettendrucker nach Anspruch 3,
**dadurch gekennzeichnet,**
**dass** zwei Trägerband-Andruckrollen (23) vorgesehen sind, wobei die Trägerband-Zugwalze (21) in der Betriebsstellung der Führungseinheit (17) zwischen den beiden Trägerband-Andruckrollen (23) angeordnet ist und/oder die Federeinrichtung (121) die beiden Trägerband-Andruckrollen (23) aufeinander zu vorspannt.

5. Etikettendrucker nach einem der vorstehenden Ansprüche,
**dadurch gekennzeichnet,**
**dass** in der Betriebsstellung der Führungseinheit (17) die vorgegebene Trägerband-Transportbahn im Bereich der Trägerband-Zugwalze (21) und der jeweiligen Trägerband-Andruckrolle (23) einen S-förmigen Verlauf aufweist, und/oder
**dass** zwei Trägerband-Andruckrollen (23) vorgesehen sind, wobei in der Betriebsstellung der Führungseinheit (17) die vorgegebene Trägerband-Transportbahn im Bereich der Trägerband-Zugwalze (21) und der beiden Trägerband-Andruckrollen (23) einen Doppel-S-förmigen Verlauf aufweist.

6. Etikettendrucker nach einem der vorstehenden Ansprüche,
**dadurch gekennzeichnet,**
**dass** zwei Trägerband-Andruckrollen (23) vorgesehen sind, die über einen Zwischenraum voneinander beabstandet angeordnet sind, wobei die Trägerband-Zugwalze (21) in der Betriebsstellung der Führungseinheit (17) in den Zwischenraum eingreift und/oder in der Einsetzstellung der Führungseinheit (17) relativ zu dem Zwischenraum aus dem Zwischenraum zurückgezogen ist.

7. Etikettendrucker nach einem der vorstehenden Ansprüche,
**dadurch gekennzeichnet,**
**dass** eine Halteeinrichtung (57) vorgesehen ist, die dazu ausgebildet ist, die Führungseinheit (17) in der Betriebsstellung wahlweise gegen ein Verschwenken in die Einsetzstellung zu sichern oder für ein Verschwenken in die Einsetzstellung freizugeben.

8. Etikettendrucker nach Anspruch 7,
**dadurch gekennzeichnet,**
**dass** die Halteeinrichtung (57) einen um eine Achse (61) zwischen einer die Führungseinheit (17) in der Betriebsstellung sichernden Haltestellung und einer die Führungseinheit (17) freigebenden Freigabestellung drehbar gelagerten Hebel (59) umfasst.

9. Etikettendrucker nach Anspruch 8,
dadurch gekenn zeichnet,
dass in der Haltestellung der Hebel (59) mit der sich in der Betriebsstellung befindlichen Führungseinheit (17) verhakt, insbesondere mit einer an einem freien Ende des Hebels (59) ausgebildeten Ausnehmung (63) in einen pilzkopfförmigen Stift (65) der sich in der Betriebsstellung befindlichen Führungseinheit (17) einhakt.

10. Etikettendrucker nach Anspruch 8 oder 9,
dadurch gekenn zeichnet,
dass der Hebel (59) an der Druckkopfeinheit (13) drehbar gelagert ist.

11. Etikettendrucker nach einem der vorstehenden Ansprüche,
dadurch gekenn zeichnet,
dass der Etikettendrucker (11) ein Thermotransfer-Etikettendrucker und dazu ausgebildet ist, ein insbesondere auf Rolle gewickeltes Thermotransferband (44) aufzunehmen, das in der Betriebsstellung der Führungseinheit (17) zwischen dem Druckkopf (15) und dem Gegenelement (19) hindurchführbar und insbesondere entlang einer vorgegebenen Thermotransferband-Transportbahn transportierbar ist, wobei ein Antriebsmechanismus für das Thermotransferband (44) mit einer angetriebenen Thermotransferband-Zugwalze (45) vorgesehen ist,
wobei die Druckkopfeinheit (13) um eine Druckkopfeinheit-Schwenkachse (55) zwischen einer Betriebsstellung und einer Einsetzstellung für das Thermotransferband (44) verschwenkbar gelagert ist,
wobei die Druckkopfeinheit (13) eine der Thermotransferband-Zugwalze (45) zugeordnete, nicht angetriebene Thermotransferband-Andruckrolle (47) umfasst,
wobei in der Betriebsstellung der Druckkopfeinheit (13) das Thermotransferband (44) zwischen der Thermotransferband-Zugwalze (45) und der Thermotransferband-Andruckrolle (47) hindurchführbar ist, und wobei in der Einsetzstellung der Druckkopfeinheit (13) die Thermotransferband-Andruckrolle (47) von der Thermotransferband-Zugwalze (45) weggeschwenkt ist.

12. Etikettendrucker nach Anspruch 11,
dadurch gekenn zeichnet,
dass die Druckkopfeinheit (13) in ihrer Betriebsstellung durch eine Festsetzeinrichtung festsetzbar ist, insbesondere durch einen von Hand betätigbaren, entlang seiner Längsachse zwischen einer Sperrstellung und einer Entsperrstellung verstellbaren Blockierstift (69).

13. Etikettendrucker nach Anspruch 12 und 8,
dadurch gekenn zeichnet,
dass der Blockierstift (69) die Achse (61) des Hebels (59), der zwischen der die Führungseinheit (17) in der Betriebsstellung sichernden Haltestellung und der die Führungseinheit (17) freigebenden Freigabestellung drehbar gelagert ist, bildet.

14. Etikettendrucker nach Anspruch 12 oder 13,
dadurch gekenn zeichnet,
dass der Blockierstift (69) in Richtung der Sperrstellung vorgespannt ist und/oder in der Sperrstellung in eine in einem Träger (79) des Etikettendruckers (11) ausgebildete Sperröffnung (139) eingerückt und in der Entsperrstellung aus der Öffnung (139) ausgerückt ist.

15. Etikettendrucker nach einem der Ansprüche 11 bis 14,
**dadurch gekennzeichnet,**
**dass** ein gemeinsamer Motor (91) vorgesehen ist, der sowohl die Trägerband-Zugwalze (21) als auch die Thermotransferband-Zugwalze (45) antreibt, wobei bevorzugt die Thermotransferband-Zugwalze (45) mittelbar über die Trägerband-Zugwalze (21) und/oder durch Zwischenschaltung einer Rutschkupplung (97) und/oder eines Getriebes (99) angetrieben wird.

16. Etikettendrucker nach Anspruch 15,
**dadurch gekennzeichnet,**
**dass** der gemeinsame Motor (91) auch eine Thermotransferband-Aufwickelwalze (51) antreibt, die bevorzugt mittelbar über die Rutschkupplung (97) und/oder das Getriebe (99) und/oder durch Zwischenschaltung einer weiteren Rutschkupplung (101) angetrieben wird.

17. Etikettendrucker nach einem der vorstehenden Ansprüche,
**dadurch gekennzeichnet,**
**dass** der Antriebsmechanismus für das Trägerband (12) eine weitere angetriebene Trägerband-Zugwalze (71) aufweist, die bevorzugt von einem eigenen Motor (103) angetrieben wird, und eine der weiteren Trägerband-Zugwalze (71) zugeordnete, nicht angetriebene weitere Trägerband-Andruckrolle (73) vorgesehen ist, wobei in Transportrichtung (25) des Trägerbands (12) gesehen die weitere Trägerband-Zugwalze (71) und die weitere Trägerband-Andruckrolle (73) vor dem Druckkopf (15) und dem Gegenelement (19) angeordnet sind.

18. Etikettendrucker nach Anspruch 17,
dadurch gekenn zeichnet,
dass die weitere Trägerband-Andruckrolle (73) Teil eines Schwenkelements (75) ist, das um eine weitere Schwenkachse (77) zwischen einer Betriebsstellung und einer Einsetzstellung für das Trägerband (12) verschwenkbar gelagert ist, wobei in der Betriebsstellung des Schwenkelements (77) das Trägerband (12) zwischen der weiteren Trägerband-Zugwalze (71) und der weiteren Trägerband-Andruckrolle (73) hindurchführbar und insbesondere entlang der vorgegebenen Trägerband-Transportbahn transportierbar ist, und wobei in der Einsetzstellung die weitere Trägerband-Andruckrolle (73) von der weiteren Trägerband-Zugwalze (71) weggeschwenkt ist.

19. Etikettendrucker nach Anspruch 17 oder 18,
dadurch gekenn zeichnet,
dass die Trägerband-Zugwalze (21), die weitere Trägerband-Zugwalze (71) und die Druckwalze (19') und optional eine Trägerband-Aufwickelwalze (41) von voneinander verschiedenen Motoren (91, 103, 107) angetrieben werden, wobei die Motoren (91, 103, 107) durch eine entsprechende Regelung elektronisch miteinander synchronisiert sind.

20. Etikettendrucker nach einem der vorstehenden Ansprüche,
dadurch gekenn zeichnet,
dass die Druckkopfeinheit (13) als austauschbares Modul ausgebildet ist und eine, insbesondere erste, Aufnahme (81) für die Druckkopfeinheit (13), von der die Druckkopfeinheit (13) aufgenommen ist, vorgesehen ist, und/oder dass die Führungseinheit (17) als austauschbares Modul ausgebildet ist und eine, insbesondere zweite, Aufnahme (83) für die Führungseinheit (17), von der die Führungseinheit (17) aufgenommen ist, vorgesehen ist.

## Claims

1. A label printer for printing labels applied to a carrier tape (12), in particular wound onto a roll, comprising
a printhead unit (13) having a printhead (15);
a drive mechanism for the carrier tape (12) having a driven carrier tape drawing roller (21); and
a guide unit (17) for the carrier tape (12), said guide unit (17) being pivotably supported about a pivot axle (53) between an operating position and an insertion position for the carrier tape (12),
**characterized in that**
the guide unit (17) comprises a counter-element (19) to the printhead (15), which is configured to hold the carrier tape (12) with the labels in contact with the printhead (15) in the operating position, in particular a driven print roller (19'), and at least one non-driven carrier tape pressure roller (23) associated with the carrier tape drawing roller (21);
wherein, in the operating position of the guide unit (17), the carrier tape (12) can be led between the printhead (15) and the counter-element (19) and between the carrier tape drawing roller (21) and the respective carrier tape pressure roller (23) and can in particular be transported along a predefined carrier tape transport path; and
wherein, in the insertion position of the guide unit (17), the counter-element (19) is pivoted away from the printhead (15) and the respective carrier tape pressure roller (23) is pivoted away from the carrier tape drawing roller (21).

2. A label printer in accordance with claim 1,
**characterized in that**
the guide unit (17) comprises a two-armed angular element (29) which is pivotably supported about the pivot axle (53), with the counter-element (19) being arranged at a first angular arm (31) and the respective carrier tape pressure roller (23) being arranged at a second angular arm (33), with preferably the angle included by the two angular arms (31, 33) having a value which lies between 90° and 170°, in particular between 110° and 150°.

3. A label printer in accordance with claim 1 or claim 2,
**characterized in that**
the respective carrier tape pressure roller (23) is displaceably supported, in particular linearly displaceably supported, perpendicular to its rotational axis, which extends in parallel with the axis of rotation of the carrier tape drawing roller (21), and in a displacement direction toward the carrier tape drawing roller (21) in the operating position of the guide unit, with a spring device (121) being provided to exert a pressing force onto the carrier tape (12), said spring device (121) preloading, in particular pulling, the respective carrier tape pressure roller (23) in the displacement direction.

4. A label printer in accordance with claim 3,
**characterized in that**
two carrier tape pressure rollers (23) are provided, with the carrier tape drawing roller (21) being arranged between the two carrier tape pressure rollers (23) in the operating position of the guide unit (17) and/or the spring device (121) preloading the two carrier tape pressure rollers (23) toward one another.

5. A label printer in accordance with any one of the preceding claims,
**characterized in that**,
in the operating position of the guide unit (17), the predefined carrier tape transport path has an S-shaped curve in the region of the carrier tape drawing roller (21) and of the respective carrier tape pressure roller (23); and/or in that two carrier tape pressure rollers (23) are provided, with, in the operating position of the guide unit (17), the predefined carrier tape transport path having a double S-shaped curve in the region of the carrier tape drawing roller (21) and of the two carrier tape pressure rollers (23).

6. A label printer in accordance with any one of the preceding claims,
**characterized in that**
two carrier tape pressure rollers (23) are provided which are arranged spaced apart from one another via an intermediate space, with the carrier tape drawing roller (21) engaging into the intermediate space in the operating position of the guide unit (17) and/or being withdrawn, relative to the intermediate space, from the intermediate space in the insertion position of the guide unit (17).

7. A label printer in accordance with any one of the preceding claims,
**characterized in that**
a holding device (57) is provided which is configured to selectively secure the guide unit (17) in the operating position against a pivoting into the insertion position or to release it for a pivoting into the insertion position.

8. A label printer in accordance with claim 7,
**characterized in that**
the holding device (57) comprises a lever (59) rotatably supported about an axle (61) between a holding position securing the guide unit (17) in the operating position and a release position releasing the guide unit (17).

9. A label printer in accordance with claim 8,
**characterized in that**,
in the holding position, the lever (59) hooks at the guide unit (17) located in the operating position and, in particular with a recess (63) formed at a free end of the lever (59), hooks into a mushroom-shaped pin (65) of the guide unit (17) located in the operating position.

10. A label printer in accordance with claim 8 or claim 9,
**characterized in that**
the lever (59) is rotatably supported at the printhead unit (13).

11. A label printer in accordance with any one of the preceding claims,
**characterized in that**
the label printer (11) is a thermal transfer label printer and is configured to receive a thermal transfer tape (44) which is in particular wound onto a roll and which, in the operating position of the guide unit (17), can be led between the printhead (15) and the counter-element (19) and can in particular be transported along a predefined thermal transfer tape transport path, with a drive mechanism for the thermal transfer tape (44) being provided with a driven thermal transfer tape drawing roller (45),
with the printhead unit (13) being pivotably supported about a printhead unit pivot axle (55) between an operating position and an insertion position for the thermal transfer tape (44),
with the printhead unit (13) comprising a non-driven thermal transfer tape pressure roller (47) associated with the thermal transfer tape drawing roller (45),
with, in the operating position of the printhead unit (13), the thermal transfer tape (44) being able to be led between the thermal transfer tape drawing roller (45) and the thermal transfer tape pressure roller (47), and
with, in the insertion position of the printhead unit (13), the thermal transfer tape pressure roller (47) being pivoted away from the thermal transfer tape drawing roller (45).

12. A label printer in accordance with claim 11,
**characterized in that**
the printhead unit (13) can be fixed in its operating position by a fixing device, in particular by a blocking pin (69) which can be actuated by hand and which is adjustable along its longitudinal axis between a blocking position and an unblocking position.

13. A label printer in accordance with claim 12 and claim 8,
**characterized in that**
the blocking pin (69) forms the axle (61) of the lever (59) which is rotatably supported between the holding position securing the guide unit (17) in the operating position and the release position releasing the guide unit (17).

14. A label printer in accordance with claim 12 or claim 13,
**characterized in that**
the blocking pin (69) is preloaded in the direction of the blocking position and/or is moved into a blocking opening (139) formed in a support (79) of the label printer (11) in the blocking position and is moved out of the opening (139) in the unblocking position.

15. A label printer in accordance with any one of the claims 11 to 14,
**characterized in that**
a common motor (91) is provided which drives both the carrier tape drawing roller (21) and the thermal transfer tape drawing roller (45), with preferably the thermal transfer tape drawing roller (45) being driven indirectly via the carrier tape drawing roller (21) and/or by an interposition of a slip clutch (97) and/or of a gear (99).

16. A label printer in accordance with claim 15,
**characterized in that**
the common motor (91) also drives a thermal transfer tape take-up roller (51) which is preferably driven indirectly via the slip clutch (97) and/or the gear (99) and/or by an interposition of a further slip clutch (101).

17. A label printer in accordance with any one of the preceding claims,
**characterized in that**
the drive mechanism for the carrier tape (12) has a further driven carrier tape drawing roller (71), which is preferably driven by a separate motor (103), and a non-driven further carrier tape pressure roller (73) associated with the further carrier tape drawing roller (71) is provided, with, viewed in the transport direction (25) of the carrier tape (12), the further carrier tape drawing roller (71) and the further carrier tape pressure roller (73) being arranged in front of the printhead (15) and the counter-element (19).

18. A label printer in accordance with claim 17,
**characterized in that**
the further carrier tape pressure roller (73) is part of a pivot element (75) which is pivotably supported about a further pivot axle (77) between an operating position and an insertion position for the carrier tape (12), with, in the operating position of the pivot element (77), the carrier tape (12) being able to be led between the further carrier tape drawing roller (71) and the further carrier tape pressure roller (73) and in particular being able to be transported along the predefined carrier tape transport path, and with, in the insertion position, the further carrier tape pressure roller (73) being pivoted away from the further carrier tape drawing roller (71).

19. A label printer in accordance with claim 17 or claim 18,
**characterized in that**
the carrier tape drawing roller (21), the further carrier tape drawing roller (71) and the print roller (19'), and optionally a carrier tape take-up roller (41), are driven by motors (91, 103, 107) which are different from one another, with the motors (91, 103, 107) being electronically synchronized with one another by a corresponding regulation.

20. A label printer in accordance with any one of the preceding claims,
**characterized in that**
the printhead unit (13) is configured as a replaceable module and a receiver (81), in particular a first receiver (81), for the printhead unit (13), by which the printhead unit (13) is received, is provided; and/or **in that** the guide unit (17) is configured as a replaceable module and a receiver (83), in particular a second receiver (83), for the guide unit (17), by which the guide unit (17) is received, is provided.

## Revendications

1. Imprimante d'étiquettes pour imprimer des étiquettes appliquées sur un ruban porteur (12), en particulier enroulées en un rouleau, comprenant une unité de tête d'impression (13) pourvue d'une tête d'impression (15), un mécanisme d'entraînement du ruban porteur (12), ayant un cylindre entraîné (21) de traction de ruban porteur, et
une unité de guidage (17) pour le ruban porteur (12), qui est montée de façon mobile en pivotement autour d'un axe de pivotement (53) entre une position de fonctionnement et une position d'insertion du ruban porteur (12), **caractérisée en ce que**
l'unité de guidage (17) comprend un contre-élément (19) complémentaire à la tête d'impression (15), qui est réalisé pour maintenir, en position de fonctionnement, le ruban porteur (12) avec les étiquettes en appui contre la tête d'impression (15), en particulier un cylindre de pression entraîné (19'), et au moins un rouleau presseur de ruban porteur (23) non entraîné, associé au cylindre de traction de ruban porteur (21),
en positionnement de fonctionnement de l'unité de guidage (17), le ruban porteur (12) peut passer entre la tête d'impression (15) et le contre-élément (19) et entre le cylindre de traction de ruban porteur (21) et le rouleau presseur de ruban porteur (23) respectif et peut en particulier être transporté le long d'une voie prédéterminée de transport du ruban porteur, et
en position d'insertion de l'unité de guidage (17), le contre-élément (19) est pivoté en éloignement de la tête d'impression (15) et le rouleau presseur de ruban porteur (23) respectif est pivoté en éloignement du cylindre de traction de ruban porteur (21).

2. Imprimante d'étiquettes selon la revendication 1,
**caractérisée en ce que**
l'unité de guidage (17) comprend un élément angulaire (29) à deux bras, qui est monté de manière à pouvoir pivoter autour de l'axe de pivotement (53), le contre-élément (19) étant disposé sur un premier bras d'angle (31) et le rouleau presseur de ruban porteur (23) respectif étant disposé sur un deuxième bras d'angle (33), de préférence, l'angle formé par les deux bras d'angle (31, 33) ayant une valeur comprise entre 90° et 170°, en particulier entre 110° et 150°.

3. Imprimante d'étiquettes selon la revendication 1 ou 2,
**caractérisée en ce que**
le rouleau presseur de ruban porteur (23) respectif est monté de façon mobile en translation perpendiculairement à son axe de rotation parallèle à l'axe de rotation du cylindre de traction de ruban porteur (21), et, en position de fonctionnement de l'unité de guidage (17), dans une direction de translation vers le cylindre de traction de ruban porteur (21), en particulier linéairement, un dispositif à ressort (121) étant prévu pour exercer une force de pressage sur le ruban porteur (12), lequel précontraint, en particulier tire, le rouleau presseur de ruban porteur (23) respectif dans la direction de translation.

4. Imprimante d'étiquettes selon la revendication 3,
**caractérisée en ce que**
il est prévu deux rouleaux presseurs de ruban porteur (23), le cylindre de traction de ruban porteur (21) étant disposé entre les deux rouleaux presseurs de ruban porteur (23) dans la position de fonctionnement de l'unité de guidage (17), et/ou le dispositif à ressort (121) mettant sous précontrainte les deux rouleaux presseurs de ruban porteur (23) l'un vers l'autre.

5. Imprimante d'étiquettes selon l'une des revendications précédentes,
**caractérisée en ce que**
dans la position de fonctionnement de l'unité de guidage (17), la voie prédéterminée de transport du ruban porteur présente un tracé en forme de S dans la zone du cylindre de traction de ruban porteur (21) et du rouleau presseur de ruban porteur (23) respectif, et/ou **en ce que** il est prévu deux rouleaux presseurs de ruban porteur (23), la voie prédéterminée de transport du ruban porteur présentant, dans la position de fonctionnement de l'unité de guidage (17), un tracé en double S dans la zone du cylindre de traction de ruban porteur (21) et des deux rouleaux presseurs de ruban porteur (23).

6. Imprimante d'étiquettes selon l'une des revendications précédentes,
**caractérisée en ce que**
il est prévu deux rouleaux presseurs de ruban porteur (23) qui sont espacés l'un de l'autre par un espace intermédiaire, le cylindre de traction de ruban porteur (21) s'engageant dans l'espace intermédiaire, dans la position de fonctionnement de l'unité de guidage (17), et/ou étant rétracté par rapport à l'espace intermédiaire hors de l'espace intermédiaire, dans la position d'insertion de l'unité de guidage (17).

7. Imprimante d'étiquettes selon l'une des revendications précédentes,
**caractérisée en ce que**
il est prévu un dispositif de maintien (57) qui est réalisé pour, au choix, bloquer l'unité de guidage (17) en position de fonctionnement à l'encontre d'un pivotement jusque dans la position d'insertion ou pour la libérer en vue d'un pivotement jusque dans la position d'insertion.

8. Imprimante d'étiquettes selon la revendication 7,
**caractérisée en ce que**
le dispositif de maintien (57) comprend un levier (59) monté de façon mobile en rotation autour d'un axe (61) entre une position de maintien bloquant l'unité de guidage (17) en position de fonctionnement et une position de libération libérant l'unité de guidage (17).

9. Imprimante d'étiquettes selon la revendication 8,
**caractérisée en ce que**
dans la position de maintien, le levier (59) s'accroche avec l'unité de guidage (17) située en position de fonctionnement, en particulier en s'accrochant par un évidement (63), ménagé à une extrémité libre du levier (59), dans une tige (65) en forme de tête de champignon de l'unité de guidage (17) située en position de fonctionnement.

10. Imprimante d'étiquettes selon la revendication 8 ou 9,
**caractérisée en ce que**
le levier (59) est monté de façon mobile en rotation sur l'unité de tête d'impression (13).

11. Imprimante d'étiquettes selon l'une des revendications précédentes,
**caractérisée en ce que**
l'imprimante d'étiquettes (11) est une imprimante d'étiquettes à transfert thermique et est réalisée pour recevoir un ruban à transfert thermique (44), en particulier enroulé en un rouleau, qui, en position de fonctionnement de l'unité de guidage (17), peut passer entre la tête d'impression (15) et le contre-élément (19) et qui, en particulier, peut être transporté le long d'une voie prédéterminée de transport du ruban à transfert thermique, et
il est prévu un mécanisme d'entraînement du ruban à transfert thermique (44), qui est pourvu d'un cylindre entraîné (45) de traction du ruban à transfert thermique,
l'unité de tête d'impression (13) est montée de façon mobile en pivotement autour d'un axe de pivotement (55) de l'unité de tête d'impression entre une position de fonctionnement et une position d'insertion du ruban à transfert thermique (44),
l'unité de tête d'impression (13) comprend un rouleau presseur de ruban à transfert thermique (47) non entraîné, associé au cylindre de traction de ruban à transfert thermique (45), et
dans la position de fonctionnement de l'unité de tête d'impression (13), le ruban à transfert thermique (44) peut passer entre le cylindre de traction de ruban à transfert thermique (45) et le rouleau presseur de ruban à transfert thermique (47), et
dans la position d'insertion de l'unité de tête d'impression (13), le rouleau presseur de ruban à transfert thermique (47) est pivoté en éloignement du cylindre de traction de ruban à transfert thermique (45).

12. Imprimante d'étiquettes selon la revendication 11,
**caractérisée en ce que**
l'unité de tête d'impression (13) peut être immobilisée dans sa position de fonctionnement par un dispositif d'immobilisation, en particulier par une tige de blocage (69) actionnable à la main, qui peut être déplacée le long de son axe longitudinal entre une position de verrouillage et une position de déverrouillage.

13. Imprimante d'étiquettes selon les revendications 12 et 8,
**caractérisée en ce que**
la tige de blocage (69) constitue l'axe (61) du levier (59) qui est monté de façon mobile en rotation entre la position de maintien bloquant l'unité de guidage (17) en position de fonctionnement et la position de libération libérant l'unité de guidage (17).

14. Imprimante d'étiquettes selon la revendication 12 ou 13,
**caractérisée en ce que**
la tige de blocage (69) est précontrainte en direction de la position de verrouillage et/ou est engagée, en position de verrouillage, dans une ouverture de verrouillage (139) ménagée dans un support (79) de l'imprimante d'étiquettes (11), et est désengagée de l'ouverture (139), en position de déverrouillage.

15. Imprimante d'étiquettes selon l'une des revendications 11 à 14,
**caractérisée en ce que**
il est prévu un moteur commun (91) qui entraîne à la fois le cylindre de traction de ruban porteur (21) et le cylindre de traction de ruban à transfert thermique (45), de préférence, le cylindre de traction de ruban à transfert thermique (45) étant entraîné indirectement par l'intermédiaire du cylindre de traction de ruban porteur (21) et/ou par interposition d'un accouplement à glissement (97) et/ou d'un engrenage (99).

16. Imprimante d'étiquettes selon la revendication 15,
**caractérisée en ce que**
le moteur commun (91) entraîne également un cylindre d'enroulement de ruban à transfert thermique (51) qui est de préférence entraîné indirectement par l'intermédiaire de l'accouplement à glissement (97) et/ou de l'engrenage (99) et/ou par interposition d'un autre accouplement à glissement (101).

17. Imprimante d'étiquettes selon l'une des revendications précédentes,
**caractérisée en ce que**
le mécanisme d'entraînement du ruban porteur (12) comprend un autre cylindre entraîné de traction de ruban porteur (71) qui est entraîné de préférence par son propre moteur (103), et il est prévu un autre rouleau presseur de ruban porteur (73) non entraîné, associé à l'autre cylindre de traction de ruban porteur (71), et
vu en direction de transport (25) du ruban porteur (12), l'autre cylindre de traction de ruban porteur (71) et l'autre rouleau presseur de ruban porteur (73) sont disposés en amont de la tête d'impression (15) et du contre-élément (19).

18. Imprimante d'étiquettes selon la revendication 17,
**caractérisée en ce que**
l'autre rouleau presseur de ruban porteur (73) fait partie d'un élément de pivotement (75) qui est monté de façon mobile en pivotement autour d'un autre axe de pivotement (77) entre une position de fonctionnement et une position d'insertion du ruban porteur (12), et
dans la position de fonctionnement de l'élément de pivotement (75), le ruban porteur (12) peut passer entre l'autre cylindre de traction de ruban porteur (71) et l'autre rouleau presseur de ruban porteur (73) et peut en particulier être transporté le long de la voie prédéterminée de transport du ruban porteur, et
dans la position d'insertion, l'autre rouleau presseur de ruban porteur (73) est pivoté en éloignement de l'autre cylindre de traction de ruban porteur (71).

19. Imprimante d'étiquettes selon la revendication 17 ou 18,
**caractérisée en ce que**
le cylindre de traction de ruban porteur (21), l'autre cylindre de traction de ruban porteur (71) et le cylindre de pression (19') et optionnellement un cylindre d'enroulement de ruban porteur (41) sont entraînés par des moteurs (91, 103, 107) différents les uns des autres, les moteurs (91, 103, 107) étant synchronisés par voie électronique par un moyen de régulation correspondant.

20. Imprimante d'étiquettes selon l'une des revendications précédentes, **caractérisée en ce que**
l'unité de tête d'impression (13) est réalisée sous la forme d'un module interchangeable, et il est prévu un logement, en particulier un premier logement (81) pour l'unité de tête d'impression (13) par lequel l'unité de tête d'impression (13) est reçue, et/ou **en ce que**
l'unité de guidage (17) est réalisée sous la forme d'un module interchangeable, et il est prévu un logement, en particulier un deuxième logement (83) pour l'unité de guidage (17), par lequel l'unité de guidage (17) est reçue.
